# EUROPEAN PATENT APPLICATION

(11) **EP 4 657 901 A1**
(43) Date of publication of application: **03.12.2025**
(21) Application number: 24752640.3
(22) Date of filing: 09.01.2024
(51) Int. Cl.: H04W 4/029

(54) **METHOD AND APPARATUS FOR POSITIONING**

(30) Priority: 10.02.2023 CN 202310158487
(71) Applicant: Huawei Technologies Co., Ltd., Shenzhen, Guangdong 518129 (CN)
(72) Inventor: JIA, Jianxin, Shenzhen, Guangdong 518129 (CN); LI, Guanglei, Shenzhen, Guangdong 518129 (CN); ZONG, Zaifeng, Shenzhen, Guangdong 518129 (CN)
(74) Representative: Goddar, Heinz J.
(86) International application number: PCT/CN2024/071416
(87) International publication number: WO 2024/164782

(57) **Abstract**

Embodiments of this application provide a location method and apparatus. The method includes: An access management network element receives first information in a cancel location procedure, where the first information indicates the access management network element to release a location resource for a location request. The access management network element releases the location resource based on the first information. In this way, in the cancel location procedure, the access management network element may release the location resource based on the first information, helping save storage space.

## Description

This application claims priority to Chinese Patent Application No. 202310158487.5, filed with the China National Intellectual Property Administration on February 10, 2023, and entitled "LOCATION METHOD AND APPARATUS", which is incorporated herein by reference in its entirety.

### TECHNICAL FIELD

Embodiments of this application relate to the communication field, and more specifically, to a location method and apparatus.

### BACKGROUND

With the rise of intelligence, vertical industries have increasingly urgent requirements for location. A location function of a 5th generation (5th generation, 5G) base station is introduced in the 3rd generation partnership project (3rd generation partnership project, 3GPP) Release (Release) 16, so that a terminal device can be located in a 5G system (5G system, 5GS).

A location procedure includes a location start procedure and a cancel location procedure. In some scenarios, a node in the location procedure does not know when to initiate a cancel location procedure or release a location resource, resulting in unnecessary occupation of storage space.

### SUMMARY

Embodiments of this application provide a location method and apparatus, to release a network resource and storage space in time.

According to a first aspect, a location method is provided. The method may be performed by an access management network element. The access management network element may be a component (for example, a circuit, a chip, or a chip system) configured in the access management network element. This is not limited in this application.

The method includes: The access management network element receives first information in a cancel location procedure, where the first information indicates the access management network element to release a location resource for a location request; and the access management network element releases the location resource based on the first information.

Based on the solution, in the cancel location procedure, the access management network element may receive the first information indicating to release the location resource for the location request, and release the location resource based on the first information, helping save storage space.

With reference to the first aspect, in some implementations of the first aspect, the access management network element receives a first message from a terminal device, where the first message includes a second message, the second message is used to cancel the location request, and the first message includes the first information.

Based on the solution, the terminal device may indicate, while starting canceling a location request, an AMF to release a resource for the location request, so that the AMF can release the location resource in time, to save storage space.

With reference to the first aspect, in some implementations of the first aspect, the first message is an uplink non-access stratum transport (UL NAS TRANSPORT) message.

With reference to the first aspect, in some implementations of the first aspect, the access management network element receives the first information from a location management network element, where the first information is sent when the location management network element receives a second message from a terminal device, and the second message is used to cancel the location request.

Based on the solution, an LMF may indicate, when receiving cancellation of a location request from the terminal device, an AMF to release a resource for the location request, so that the AMF can release the location resource in time, to save storage space.

With reference to the first aspect, in some implementations of the first aspect, the second message is a cancel location (cancel location) message.

With reference to the first aspect, in some implementations of the first aspect, the method further includes: The access management network element sends fourth information to the location management network element, where the fourth information indicates that the access management network element has saved the location resource.

With reference to the first aspect, in some implementations of the first aspect, the access management network element receives third information from the location management network element, where the third information is used to subscribe to a save notification of the location resource.

With reference to the first aspect, in some implementations of the first aspect, the access management network element sends second information to the location management network element, where the second information is used to subscribe to a cancellation notification of the location request.

With reference to the first aspect, in some implementations of the first aspect, the second information is carried in a location determining request (Nlmf_Location_DetermineLocation Request) message, and the location determining request is used for location information of the terminal device.

With reference to the first aspect, in some implementations of the first aspect, the location determining request message further carries at least one of the following information: a notification endpoint (notification endpoint) or a notification target address (notification target address) (where the notification target address may be, for example, an IP address or an FQDN), a notification correlation identifier (for example, a notification URL), and a URI (for example, a callback URI).

With reference to the first aspect, in some implementations of the first aspect, if the access management network element determines that a type of the location request is a deferred location request, the access management network element sends the second information to the location management network element.

With reference to the first aspect, in some implementations of the first aspect, the access management network element receives the location resource from a gateway mobile location center network element, and the access management network element saves the location resource.

According to a second aspect, a location method is provided. The method may be performed by a location management network element. The location management network element may be a component (for example, a circuit, a chip, or a chip system) configured in the location management network element. This is not limited in this application.

The method includes: The location management network element receives a second message from a terminal device, where the second message is used to cancel a location request; and the location management network element sends first information to an access management network element, where the first information indicates the access management network element to release a location resource for the location request.

Based on the solution, an LMF may indicate, when receiving cancellation of a location request from the terminal device, an AMF to release a resource for the location request, so that the AMF can release the location resource in time, to save storage space.

With reference to the second aspect, in some implementations of the second aspect, the location management network element receives fourth information from the access management network element, where the fourth information indicates that the access management network element has saved the location resource.

With reference to the second aspect, in some implementations of the second aspect, the location management network element sends third information to the access management network element, where the third information is used to subscribe to a save notification of the location service.

With reference to the second aspect, in some implementations of the second aspect, the location management network element receives second information from the access management network element, where the second information is used to subscribe to a cancellation notification of the location request.

With reference to the second aspect, in some implementations of the second aspect, if the location management network element determines that a type of the location request is a deferred location request, the location management network element sends the first information to the access management network element.

According to a third aspect, a location method is provided. The method may be performed by a terminal device. The terminal device may be a component (for example, a circuit, a chip, or a chip system) configured in the terminal device. This is not limited in this application.

The method includes: The terminal device initiates a cancel location procedure; and the terminal device sends first information to an access management network element, where the first information indicates to release a location resource for a location request.

Based on the solution, the terminal device may indicate, while starting canceling a location request, an AMF to release a resource for the location request, so that the AMF can release the location resource in time, to save storage space.

With reference to the third aspect, in some implementations of the third aspect, if the terminal device determines that a type of the location request is a deferred location request, the terminal device sends the first information to the access management network element.

With reference to the third aspect, in some implementations of the third aspect, the first information is carried in a first message, the first message includes a second message, and the second message is used to cancel the location request.

According to a fourth aspect, a location method is provided. The method includes: A location management network element receives a second message from a terminal device, where the second message is used to cancel a location request; the location management network element sends first information to an access management network element, where the first information indicates the access management network element to release a location resource for the location request; and the access management network element releases the location resource based on the first information.

According to a fifth aspect, a location method is provided. The method may be performed by a first network element. The first network element may be a component (for example, a circuit, a chip, or a chip system) configured in the first network element. This is not limited in this application.

The method includes: The first network element receives fifth information from a second network element in a first communication network, where the fifth information indicates that a terminal device accesses a second communication network or the terminal device moves to the second communication network, the first network element is a location management network element of the first communication network, and the second network element is an access management network element of the first communication network; and the first network element initiates a cancel location procedure in the first communication network.

Based on the solution, when the terminal device accesses a second system or moves to the second system, the first network element may trigger, in time, a node in a first system to release a location resource, to help save storage space.

With reference to the fifth aspect, in some implementations of the fifth aspect, the first network element releases a location resource for the terminal device in the first communication network.

With reference to the fifth aspect, in some implementations of the fifth aspect, the fifth information is carried in a location event notification message or a subscriber location report message.

With reference to the fifth aspect, in some implementations of the fifth aspect, the method further includes: The first network element sends sixth information to the second network element in the first communication network, where the sixth information is used to subscribe to the fifth information.

With reference to the fifth aspect, in some implementations of the fifth aspect, the first network element sends the sixth information to the second network element if at least one of the following conditions is met: The first network element determines that an access type allowed by the terminal device for event reporting includes an access type of the second communication network; and the first network element determines that a type of a location request is a deferred location request.

With reference to the fifth aspect, in some implementations of the fifth aspect, the first communication network is a 5th generation system, the second communication network is an evolved packet system, the first network element is a mobility management entity, the second network element is an enhanced serving mobile location center network element, the sixth information is carried in an event exposure (Namf_EventExposure) message, and the event exposure message is used to subscribe to an event notification.

With reference to the fifth aspect, in some implementations of the fifth aspect, the first network element receives ninth information from the second network element in the first system, where the ninth information is used to request a location resource for the location request; and the first network element sends the location resource to the second network element in the first system.

With reference to the fifth aspect, in some implementations of the fifth aspect, the method further includes: The first network element sends seventh information to a gateway mobile location center network element, where the seventh information indicates that the terminal device accesses the second communication network or the terminal device moves to the second communication network.

With reference to the fifth aspect, in some implementations of the fifth aspect, the first communication network is the 5th generation system, the second communication network is the evolved packet system, the first network element is the mobility management entity, the second network element is the enhanced serving mobile location center network element, and the seventh information is carried in an event exposure (Nlmf_EventNotify) message.

According to a sixth aspect, a location method is provided. The method may be performed by a second network element. The second network element may be a component (for example, a circuit, a chip, or a chip system) configured in second network element. This is not limited in this application.

The method includes: The second network element receives a third message in a first communication network, where the third message indicates that a terminal device accesses a second communication network or the terminal device moves to the second communication network, and the second network element is an access management network element of the first communication network; and the second network element sends fifth information to a first network element in the first communication network, where the fifth information indicates that the terminal device accesses the second communication network or the terminal device moves to the second communication network, and the first network element is a location management network element of the first communication network.

Based on the solution, when the terminal device accesses a second system or moves to the second system, the first network element may trigger, in time, a node in a first system to release a location resource, to help save storage space.

With reference to the sixth aspect, in some implementations of the sixth aspect, the second network element receives sixth information from the first network element in the first communication network, where the sixth information is used to subscribe to the fifth information.

With reference to the sixth aspect, in some implementations of the sixth aspect, the second network element sends eighth information to a gateway mobile location center network element, where the eighth information indicates that the terminal device accesses the second communication network or the terminal device moves to the second communication network.

With reference to the sixth aspect, in some implementations of the sixth aspect, the second network element sends ninth information to the first network element in the first system, where the ninth information is used to request a location resource for a location request.

With reference to the sixth aspect, in some implementations of the sixth aspect, the second network element receives the location resource from the first network element; and the second network element determines an address of the gateway mobile location center network element based on the location resource.

With reference to the sixth aspect, in some implementations of the sixth aspect, the first communication network is a 5th generation system, the second communication network is an evolved packet system, the first network element is a location management network element, the second network element is an access management network element, the third message is from an access network device of the 5th generation system, and the third message is any one of the following: a relocation complete notification (Relocation Complete Notification) message, a relocation response (Relocation response) message, and a handover required (handover required) message.

With reference to the sixth aspect, in some implementations of the sixth aspect, the first communication network is an evolved packet system, the second communication network is a 5th generation system, the first network element is a mobility management entity, the second network element is an enhanced serving mobile location center network element, the third message is from an access network device of the evolved packet system, and the third message is any one of the following: a forward relocation response (Forward Relocation Response) message, a forward relocation complete notification (Forward Relocation Complete Notification) message, and a handover required (handover required) message.

With reference to the sixth aspect, in some implementations of the sixth aspect, the first communication network is an evolved packet system, the second communication network is a 5th generation system, the sixth information is carried in an event exposure (Namf_EventExposure) message, and the event exposure message is used to subscribe to an event notification.

According to a seventh aspect, a location method is provided. The method includes: A second network element receives a third message in a first communication network, where the third message indicates that a terminal device accesses a second communication network or the terminal device moves to the second communication network, and the second network element is an access management network element of the first communication network; the second network element sends fifth information to a first network element in the first communication network, where the fifth information indicates that the terminal device accesses the second communication network or the terminal device moves to the second communication network, and the first network element is a location management network element of the first communication network; and the first network element initiates a cancel location procedure in the first communication network.

According to an eighth aspect, a communication apparatus is provided. The apparatus includes a transceiver unit and a processing unit. The transceiver unit is configured to receive first information in a cancel location procedure, where the first information indicates an access management network element to release a location resource for a location request; and the processing unit is configured to release the location resource based on the first information.

With reference to the eighth aspect, in some implementations of the eighth aspect, the transceiver unit is specifically configured to receive a first message from a terminal device, where the first message includes a second message, the second message is used to cancel the location request, and the first message includes the first information.

With reference to the eighth aspect, in some implementations of the eighth aspect, the first message is an uplink non-access stratum transport (UL NAS TRANSPORT) message.

With reference to the eighth aspect, in some implementations of the eighth aspect, the transceiver unit is specifically configured to receive the first information from a location management network element, where the first information is sent when the location management network element receives a second message from a terminal device, and the second message is used to cancel the location request.

With reference to the eighth aspect, in some implementations of the eighth aspect, the second message is a cancel location (cancel location) message.

With reference to the eighth aspect, in some implementations of the eighth aspect, the transceiver unit is further configured to send fourth information to the location management network element, where the fourth information indicates that the access management network element has saved the location resource.

With reference to the eighth aspect, in some implementations of the eighth aspect, the transceiver unit is further configured to receive third information from the location management network element, where the third information is used to subscribe to a save notification of the location resource.

With reference to the eighth aspect, in some implementations of the eighth aspect, the transceiver unit is further configured to send second information to the location management network element, where the second information is used to subscribe to a cancellation notification of the location request.

With reference to the eighth aspect, in some implementations of the eighth aspect, the second information is carried in a location determining request (Nlmf Location_DetermineLocation Request) message, and the location determining request is used for location information of the terminal device.

With reference to the eighth aspect, in some implementations of the eighth aspect, the location determining request message further carries at least one of the following information: a notification endpoint (notification endpoint) or a notification target address (notification target address) (where the notification target address may be, for example, an IP address or an FQDN), a notification correlation identifier (for example, a notification URL), and a URI (for example, a callback URI).

With reference to the eighth aspect, in some implementations of the eighth aspect, if the communication apparatus determines that a type of the location request is a deferred location request, the transceiver unit is configured to send the second information to the location management network element.

With reference to the eighth aspect, in some implementations of the eighth aspect, the apparatus further includes a storage unit. The transceiver unit is further configured to receive the location resource from a gateway mobile location center network element; and the storage unit is configured to save the location resource.

According to a ninth aspect, a communication apparatus is provided. The apparatus includes a transceiver unit. The transceiver unit is configured to receive a second message from a terminal device, where the second message is used to cancel a location request; and the transceiver unit is further configured to send first information to an access management network element, where the first information indicates the access management network element to release a location resource for the location request.

With reference to the ninth aspect, in some implementations of the ninth aspect, the transceiver unit is further configured to receive fourth information from the access management network element, where the fourth information indicates that the access management network element has saved the location resource.

With reference to the ninth aspect, in some implementations of the ninth aspect, the transceiver unit is further configured to send third information to the access management network element, where the third information is used to subscribe to a save notification of the location service.

With reference to the ninth aspect, in some implementations of the ninth aspect, the transceiver unit is further configured to receive second information from the access management network element, where the second information is used to subscribe to a cancellation notification of the location request.

With reference to the ninth aspect, in some implementations of the ninth aspect, if the apparatus determines that a type of the location request is a deferred location request, the transceiver unit is further configured to send the first information to the access management network element.

According to a tenth aspect, a communication apparatus is provided. The apparatus includes a processing unit and a transceiver unit. The processing unit is configured to initiate a cancel location procedure; and the transceiver unit is configured to send first information to an access management network element, where the first information indicates to release a location resource for a location request.

With reference to the tenth aspect, in some implementations of the tenth aspect, if the apparatus determines that a type of the location request is a deferred location request, the transceiver unit is configured to send the first information to the access management network element.

With reference to the tenth aspect, in some implementations of the tenth aspect, the first information is carried in a first message, the first message includes a second message, and the second message is used to cancel the location request.

According to an eleventh aspect, a communication system is provided. The communication system includes a location management network element and an access management network element. The location management network element is configured to receive a second message from a terminal device, where the second message is used to cancel a location request; the location management network element is further configured to send first information to the access management network element, where the first information indicates the access management network element to release a location resource for the location request; and the access management network element is configured to release the location resource based on the first information.

According to a twelfth aspect, a communication apparatus is provided. The apparatus includes a transceiver unit and a processing unit. The transceiver unit is configured to receive fifth information from a second network element in a first communication network, the fifth information indicates that a terminal device accesses a second communication network or the terminal device moves to the second communication network, the apparatus is a location management network element of the first communication network, the second network element is an access management network element of the first communication network; and the processing unit is configured to initiate a cancel location procedure in the first communication network.

With reference to the twelfth aspect, in some implementations of the twelfth aspect, the processing unit is further configured to release a location resource for the terminal device in the first communication network.

With reference to the twelfth aspect, in some implementations of the twelfth aspect, the fifth information is carried in a location event notification message or a subscriber location report message.

With reference to the twelfth aspect, in some implementations of the twelfth aspect, the transceiver unit is further configured to send sixth information to the second network element in the first communication network, where the sixth information is used to subscribe to the fifth information.

With reference to the twelfth aspect, in some implementations of the twelfth aspect, the transceiver unit is specifically configured to send the sixth information to the second network element when at least one of the following conditions is met: The apparatus determines that an access type allowed by the terminal device for event reporting includes an access type of the second communication network; and the apparatus determines that a type of a location request is a deferred location request.

With reference to the twelfth aspect, in some implementations of the twelfth aspect, the first communication network is a 5th generation system, the second communication network is an evolved packet system, the apparatus is a mobility management entity, the second network element is an enhanced serving mobile location center network element, the sixth information is carried in an event exposure (Namf_EventExposure) message, and the event exposure message is used to subscribe to an event notification.

With reference to the twelfth aspect, in some implementations of the twelfth aspect, the transceiver unit is further configured to receive ninth information from the second network element in the first system, where the ninth information is used to request a location resource for the location request; and the transceiver unit is specifically configured to send the location resource to the second network element in the first system.

With reference to the twelfth aspect, in some implementations of the twelfth aspect, the transceiver unit is further configured to send seventh information to a gateway mobile location center network element, where the seventh information indicates that the terminal device accesses the second communication network or the terminal device moves to the second communication network.

With reference to the twelfth aspect, in some implementations of the twelfth aspect, the first communication network is the 5th generation system, the second communication network is the evolved packet system, the apparatus is the mobility management entity, the second network element is the enhanced serving mobile location center network element, and the seventh information is carried in an event exposure (Nlmf_EventNotify) message.

According to a thirteenth aspect, a communication apparatus is provided. The apparatus includes a transceiver unit. The transceiver unit is configured to receive a third message in a first communication network, the third message indicates that a terminal device accesses a second communication network or the terminal device moves to the second communication network, and the apparatus is an access management network element of the first communication network; and the transceiver unit is further configured to send fifth information to a first network element in the first communication network, where the fifth information indicates that the terminal device accesses the second communication network or the terminal device moves to the second communication network, and the first network element is a location management network element of the first communication network.

With reference to the thirteenth aspect, in some implementations of the thirteenth aspect, the transceiver unit is further configured to receive sixth information from the first network element in the first communication network, where the sixth information is used to subscribe to the fifth information.

With reference to the thirteenth aspect, in some implementations of the thirteenth aspect, the transceiver unit is further configured to send eighth information to a gateway mobile location center network element, where the eighth information indicates that the terminal device accesses the second communication network or the terminal device moves to the second communication network.

With reference to the thirteenth aspect, in some implementations of the thirteenth aspect, the transceiver unit is further configured to send ninth information to the first network element in the first system, where the ninth information is used to request a location resource for a location request.

With reference to the thirteenth aspect, in some implementations of the thirteenth aspect, the apparatus further includes a processing unit. The transceiver unit is further configured to receive the location resource from the first network element; and the processing unit is configured to determine an address of the gateway mobile location center network element based on the location resource.

With reference to the thirteenth aspect, in some implementations of the thirteenth aspect, the first communication network is a 5th generation system, the second communication network is an evolved packet system, the first network element is a location management network element, the apparatus is an access management network element, the third message is from an access network device of the 5th generation system, and the third message is any one of the following: a relocation complete notification (Relocation Complete Notification) message, a relocation response (Relocation response) message, and a handover required (handover required) message.

With reference to the thirteenth aspect, in some implementations of the thirteenth aspect, the first communication network is an evolved packet system, the second communication network is a 5th generation system, the first network element is a mobility management entity, the apparatus is an enhanced serving mobile location center network element, the third message is from an access network device of the evolved packet system, and the third message is any one of the following: a forward relocation response (Forward Relocation Response) message, a forward relocation complete notification (Forward Relocation Complete Notification) message, and a handover required (handover required) message.

With reference to the thirteenth aspect, in some implementations of the thirteenth aspect, the first communication network is an evolved packet system, the second communication network is a 5th generation system, the sixth information is carried in an event exposure (Namf_EventExposure) message, and the event exposure message is used to subscribe to an event notification.

According to a fourteenth aspect, a communication system is provided. The communication system includes a first network element and a second network element. The second network element is configured to receive a third message in a first communication network, where the third message indicates that a terminal device accesses a second communication network or the terminal device moves to the second communication network, and the second network element is an access management network element of the first communication network; the second network element is further configured to send fifth information to the first network element in the first communication network, where the fifth information indicates that the terminal device accesses the second communication network or the terminal device moves to the second communication network, and the first network element is a location management network element of the first communication network; and the first network element is configured to initiate a cancel location procedure in the first communication network.

According to a fifteenth aspect, a communication apparatus is provided. The communication apparatus has a function of implementing the method according to any one of the first aspect to the seventh aspect or the possible implementations of these aspects. The function may be implemented by hardware, or may be implemented by hardware executing corresponding software. The hardware or the software includes one or more units corresponding to the foregoing functions.

According to a sixteenth aspect, a communication apparatus is provided, including a processor and a memory. Optionally, the communication apparatus may further include a transceiver. The memory is configured to store a computer program. The processor is configured to invoke the computer program stored in the memory and run the computer program, and control the transceiver to receive/send a signal, to enable the communication apparatus to perform the method according to any one of the first aspect to the seventh aspect or the possible implementations of these aspects.

According to a seventeenth aspect, a communication apparatus is provided, including a processor and a communication interface. The communication interface is configured to receive data and/or information, and transmit the received data and/or information to the processor; the processor processes the data and/or information; and the communication interface is further configured to output data and/or information that are/is obtained after processing by the processor, so that the method according to any one of the first aspect to the seventh aspect or the possible implementations of these aspects is performed.

According to an eighteenth aspect, a computer-readable storage medium is provided. The computer-readable storage medium stores computer instructions, and when the computer instructions are run on a computer, the method according to any one of the first aspect to the seventh aspect or the possible implementations of these aspects is enabled to be performed.

According to a nineteenth aspect, a computer program product is provided. The computer program product includes computer program code, and when the computer program code is run on a computer, the method according to any one of the first aspect to the seventh aspect or the possible implementations of these aspects is enabled to be performed.

### BRIEF DESCRIPTION OF DRAWINGS

FIG. 1 shows a network architecture applicable to an embodiment of this application;
FIG. 2 shows another network architecture applicable to an embodiment of this application;
FIG. 3 is a diagram of a network architecture for interaction between 5G and 4G according to an embodiment of this application;
FIG. 4 is a diagram of another network architecture for interaction between 5G and 4G according to an embodiment of this application;
FIG. 5 is a diagram of a location method 200 according to an embodiment of this application;
FIG. 6 is a diagram of a location method 300 according to an embodiment of this application;
FIG. 7 is a diagram of a location method 400 according to an embodiment of this application;
FIG. 8 is a diagram of a location method 500 according to an embodiment of this application;
FIG. 9 is a diagram of a location method 600 according to an embodiment of this application;
FIG. 10 is a diagram of a location method 700 according to an embodiment of this application;
FIG. 11 is a diagram of a location method 800 according to an embodiment of this application;
FIG. 12 is a diagram of a location method 900 according to an embodiment of this application;
FIG. 13 is a diagram of a location apparatus 1000 according to an embodiment of this application; and
FIG. 14 is a diagram of a location apparatus 1100 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a 5th generation (5th generation, 5G) system, a new radio (new radio, NR) system, or another evolved communication system.

The technical solutions provided in this application may be further applied to a future communication system, for example, a sixth generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle to X device (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian communication (vehicle to vehicle, V2P), vehicle to network (vehicle to network, V2N) communication, or the like.

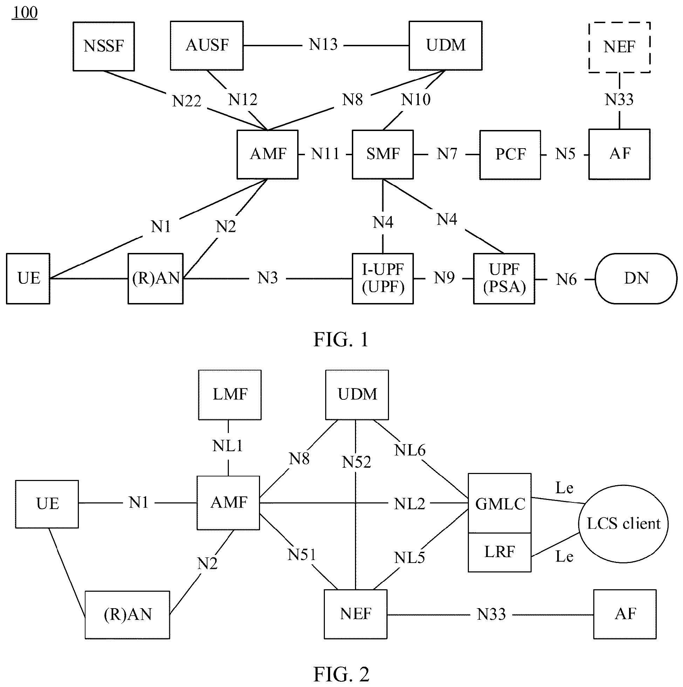

For example, FIG. 1 is a diagram of a network architecture applicable to an embodiment of this application. As shown in FIG. 1, a 5G system (the 5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the internet. The NSSF, the AUSF, the UDM, the NEF, the NRF, the PCF, the AF, the AMF, the SMF, and the UPF are network elements in a core network. Because the 5G system is used as an example in FIG. 1, the core network may be referred to as a 5G core network (5G core network, 5GC or 5GCN).

The following briefly describes the network elements shown in FIG. 1.
1. User equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example rather than limitation, in embodiments of this application, the terminal device may alternatively be the wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. IoT is an important part of future development of information technologies. A main technical feature of the IoT is connecting a thing to a network through a communication technology, to implement an intelligent network for interconnection between a person and a machine or between one thing and another.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be a terminal device; or may be an apparatus, for example, a chip system or a chip, that can support a terminal device in implementing the function, and the apparatus may be mounted in the terminal device. In embodiments of this application, the chip system may include a chip, or may include the chip and another discrete component.

2. A (radio) access network ((radio) access network, (R)AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation NodeB (next generation Node Base station, gNB) or a next generation radio access network (next generation radio access network, NG-RAN) device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), code division multiple access (code division multiple access, CDMA), and the like. The AN device may allow interconnection and interworking performed between the terminal device and a 3GPP core network by using the non-3GPP technology.

The AN device can be responsible for functions such as radio resource management, quality of service (quality of service, QoS) management, data compression and encryption on an air interface side. The AN device provides an access service for the terminal device, to complete forwarding a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission reception point (transmission reception point, TRP); may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next generation 6G communication system. A specific technology and a specific device form that are used by the AN device are not limited in embodiments of this application.

3. An access management network element is mainly for functions such as access control, mobility management, and attachment and detachment.

In a 5G communication system, the access management network element may be an access and mobility management function (access and mobility management function, AMF) network element. In a future communication system, the access management network element may still be an AMF network element, or may have another name. This is not limited in this application.

4. A session management network element is mainly used for user plane network element selection, user plane network element redirection, internet protocol (internet protocol, IP) address assignment for the terminal device, session establishment, modification, and release, and QoS control.

In the 5G communication system, the session management network element may be a session management function (session management function, SMF) network element. In the future communication system, the session management network element may still be an SMF network element, or may have another name. This is not limited in this application.

5. A user plane network element may also be referred to as a user plane function, a user plane network element, or a user plane function network element, and is used for packet routing and forwarding, quality of service (quality of service, QoS) processing of user plane data, or the like.

In the 5G communication system, the user plane network element may be a user plane function (user plane function, UPF) network element. In the future communication system, the user plane network element may still be a UPF network element, or may have another name. This is not limited in this application.

The UPF is specifically classified into an intermediate-UPF (intermediate-UPF, I-UPF) and an anchor-UPF (anchor-UPF, A-UPF). The I-UPF is connected to an access network RAN, the A-UPF is a UPF of a session anchor, and the A-UPF may also be referred to as a PDU session anchor (PDU session anchor, PSA).

6. A policy control network element is configured to guide a unified policy framework for network behavior, provide policy rule information for a control plane function network element (for example, the AMF or the SMF), and the like.

In the 5G communication system, the policy control network element may be a policy control function (policy control function, PCF) network element. In the future communication system, the policy control network element may still be a PCF network element, or may have another name. This is not limited in this application.

7. An application network element is mainly used for providing a service for a 3GPP network, for example, interacting with the PCF to perform policy control.

In the 5G communication system, the application network element may be an application function (application function, AF) network element. In the future communication system, an application network element may still be the AF network element, or may have another name. This is not limited in this application.

8. The NSSF is mainly for selecting a network slice.

9. A data management network element is mainly used for subscription data management of UE, including storage and management of a UE identifier, access authorization of the UE, and the like.

In the 5G communication system, the data management network element may be a unified data management (unified data management, UDM) network element. In the future communication system, the unified data management may still be a UDM network element, or may have another name. This is not limited in this application.

10. A data network is an operator network mainly used for providing a data service for UE, for example, the internet (Internet), a third-party service network, or an IP multimedia service (IP multi-media service, IMS) network.

In the 5G communication system, the data network may be a data network (data network, DN). In the future communication system, the data network may still be a DN, or may have another name. This is not limited in this application.

11. An authentication server network element is mainly used for user authentication or the like.

In the 5G communication system, the authentication server network element may be an authentication server function (authentication server function, AUSF) network element. In the future communication system, the authentication server network element may still be the AUSF network element, or may have another name. This is not limited in this application.

Optionally, the system architecture 100 may further include a network exposure function (network exposure function, NEF).

In the system architecture 100, an N1 interface is a reference point between the terminal device and the AMF; an N2 interface is a reference point between the (R)AN and the AMF, and is configured to send a non-access stratum (non-access stratum, NAS) message and the like; an N3 interface is a reference point between the (R)AN and the I-UPF, and is configured to transmit user plane data and the like; an N4 interface is a reference point between the SMF and the I-UPF, and is configured to transmit information such as tunnel identifier information of an N3 connection, data buffer indication information, and a downlink data notification message; an N5 interface is a reference point between the PCF and the AF; an N6 interface is a reference point between the UPF and the DN, and is configured to transmit user plane data and the like; an N7 interface is a reference point between the SMF and the PCF; an N8 interface is a reference point between the AMF and the UDM; an N9 interface is a reference point between UPFs; an N10 interface is a reference point between the SMF and the UDM; an N11 interface is a reference point between the AMF and the SMF; an N12 interface is a reference point between the AMF and the AUSF; an N22 interface is a reference point between the AMF and the NSSF; and an N33 interface is a reference point between the AF and the NEF.

It should be noted that names of the network elements and the communication interfaces between the network elements in FIG. 1 are briefly described by using an example specified in a current protocol. However, embodiments of this application are not limited to being applicable only to a currently known communication system. Therefore, a standard name that appears when a current protocol is used as an example for description is a functional description. A specific name of a network element, an interface, signaling, or the like is not limited in this application, and only indicates a function of the network element, the interface, or the signaling, and may be correspondingly extended to another system, such as a 2G, 3G, 4G, or future communication system.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

It should be further understood that the AMF, the SMF, the UPF, the PCF, the NSSF, the AUSF, the UDM, and the like shown in FIG. 1 may be understood as network elements configured to implement different functions in a core network, for example, may be combined as required to form a network slice. These core network elements may be independent devices, or may be integrated into a same device to implement different functions. A specific form of the foregoing network elements is not limited in this application.

With the rise of intelligence, vertical industries have increasingly urgent requirements for location. A location function of a 5G base station is introduced in 3GPP Release (Release) 16. Application scenarios are mainly classified into two types: a wide area location scenario and a local area location scenario. Typical wide area scenarios include smart internet of things (for example, elderly location and pet tracking), smart policing (for example, firefighter safety location, 110/119 reporter location, and police vehicle location), and the like. Typical local area location scenarios include smart manufacturing (for example, personnel location management and material location management), smart chemical (for example, personnel location management, electronic fence, and one-click alarm reporting), and smart shopping malls and supermarkets (for example, product push and smart operations, customer flow analysis and shopping mall management, navigation and shopping guide, and parking and vehicle seeking).

In view of the above background, study on enhancement to a 5G location service (LoCation services, LCS) (study on enhancement to the 5GC LCS) has become a key research topic. To support a location service, the 3GPP TS 23.273 protocol standard is extended in the system architecture shown in FIG. 1. For example, an extended architecture is shown in FIG. 2.

FIG. 2 is a diagram of another network architecture applicable an embodiment of this application. As shown in FIG. 2, a plurality of function network elements such as a gateway mobile location center (gateway mobile location center, GMLC), a location retrieval function (location retrieval function, LRF), a location service client (LCS client), and a location management function (location management function, LMF) are added to the system architecture, to support a location service function. An NL1 interface is a reference point between the AMF and the LMF; an NL2 interface is a reference point between the AMF and the GMLS; an NL5 interface is a reference point between the NEF and the GMLS; an NL6 interface is a reference point between the UDM and the GMLS, and an Le interface is a reference point between the LCS client and the GMLS or the LRF. The location management function (location management function, LMF) may also be referred to as a location management network element.

In this application, the gateway mobile location center may also be referred to as a gateway mobile location center.

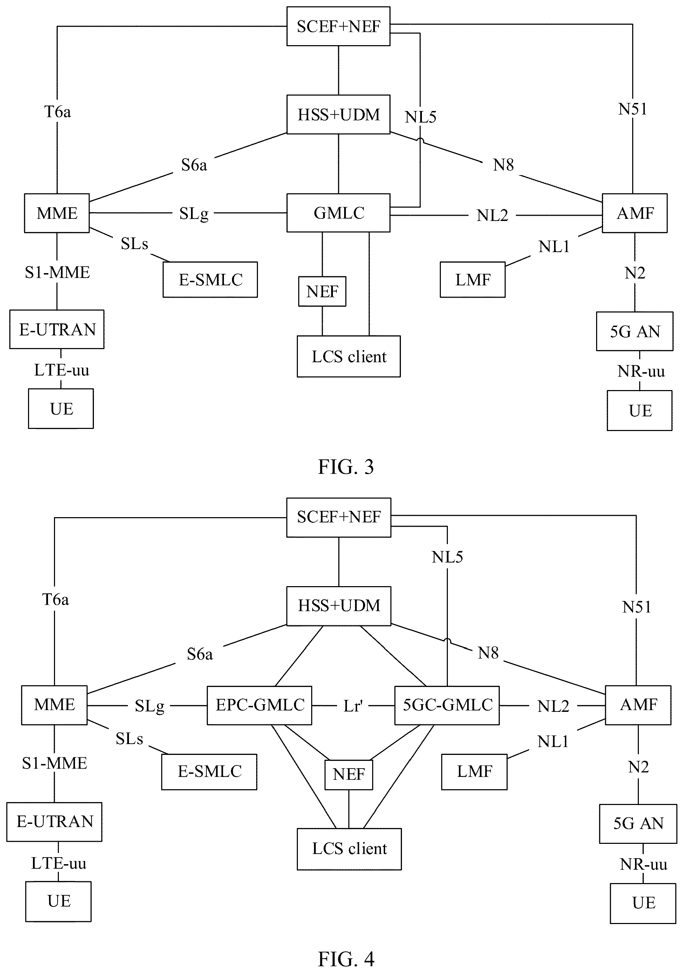

FIG. 3 is a diagram of a network architecture for interaction between 5G and 4G according to an embodiment of this application.

As shown in FIG. 3, UE may access a 5GC via a 5G AN. For example, a terminal device may access a 5G core network element AMF, so that the AMF may manage the UE. The terminal device may further access a 4G evolved packet core network (evolved packet core network, EPC), for example, an access mobility management entity (mobility management entity, MME), via a 4G access network, namely, an evolved UMTS terrestrial radio access network (evolved UMTS terrestrial radio access network, E-UTRAN), so that the MME can manage the UE. In the EPC, an enhanced serving mobile location center (evolved serving mobile location center, E-SMLC) may be configured to provide, for the MME, location information of the UE managed by the MME. In the 5GC, an LMF may be configured to provide, for the AMF, location information of the UE managed by the AMF.

In addition, the wireless communication system may further include a network element co-deployed by a 5G core network and a 4G core network, for example, a GMLC, a (service capability exposure function, SCEF) and network exposure function (network exposure function, NEF) co-deployed network element (referred to as SCEF+NEF in FIG. 3), and a home subscriber server (home subscriber server, HSS) and unified data management (unified data management, UDM) co-deployed network element (referred to as HSS+UDM in FIG. 3). The GMLC is a co-deployed network element of an evolved packet core network-gateway mobile location center (evolved packet core network-gateway mobile location center, EPC-GMLC) and a 5th generation core network-gateway mobile location center (5G core network-gateway mobile location center, 5GC-GMLC).

It can be learned from FIG. 3 that interaction between two networks is implemented by using a co-deployed network element (for example, the GMLC, the SCEF+NEF, or the HSS+UDM shown in FIG. 3) of the 5G network and the 4G network.

It should be noted that names of interfaces (for example, LTE-uu, S1-MME, SLs, SLg, S6a, T6a, N51, NL5, N8, NL2, NL1, N2, and NR-uu shown in FIG. 3) shown in FIG. 3 are merely examples for describing interfaces between network elements, and do not constitute any limitation on the protection scope of this application. For meanings of these interface sequence numbers, refer to definitions in a standard protocol.

FIG. 4 is a diagram of another network architecture for interaction between 5G and 4G according to an embodiment of this application.

A difference between FIG. 4 and FIG. 3 lies in that the EPC-GMLC and the 5GC-GMLC are not co-deployed, and the EPC-GMLC and the 5GC-GMLC interact with each other through an interface Lr'.

A location procedure includes a location start procedure and a cancel location procedure. In some scenarios, a node in the location procedure does not know when to initiate a cancel location procedure or release a location resource, resulting in unnecessary occupation of transmission resources.

For example, to support continuity of a location service, a feature of saving a location resource by an access management network element may be enhanced. However, for a location request cancellation (cancellation) procedure initiated by a located device, because the access management network element cannot sense the cancellation procedure, the access management network element cannot release a location resource in time, resulting in residual resources and unnecessary occupation of network resources.

For another example, if mobility handover is performed on the located device, because a location management network element cannot sense the mobility handover, the cancel location procedure cannot be performed in time, resulting in high overheads.

In view of this, this application provides a location method and apparatus, so that the node in the location procedure can release a network resource in time, to save storage space.

It may be understood that the term "and/or" in this specification describes only an association relationship for associated objects and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes terms used in this application. Details are not described in the following embodiments. The following describes in detail, with reference to the accompanying drawings, the location method provided in embodiments of this application. Embodiments provided in this application may be applied to any one of the network architectures shown in FIG. 1 to FIG. 4. This is not limited.

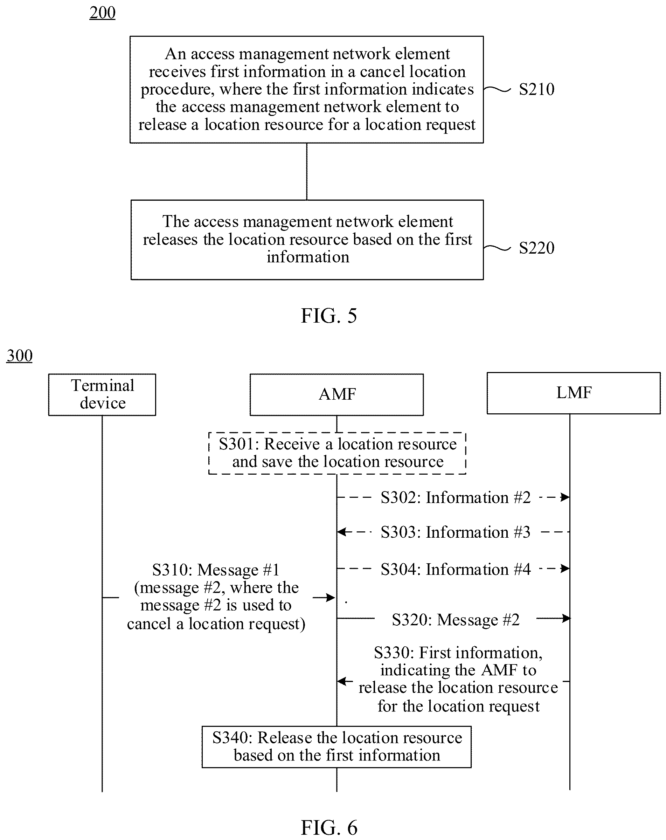

FIG. 5 is a diagram of a location method 200 according to an embodiment of this application. The method 200 may include the following steps.

S210: An access management network element receives first information in a cancel location procedure, where the first information indicates the access management network element to release a location resource for a location request.

The location resource may also be referred to as a location context, or referred to as a location-related resource, a location-related context, a resource for the location request (resources for the location request), or location context data (loccontextdata or location context data).

"The first information indicates the access management network element to release the location resource for the location request" may be replaced with any one of the following descriptions: "The first information indicates to release the location resource", "the first information indicates to release the location context", "the first information indicates to release the location-related resource", and "the first information indicates to release the location-related context".

The first information may be an indication, where the indication may be a specified value, for example, "00"; the first information may be of an enumeration type, for example, an integer; the first information may be of a Boolean type, for example, 1 or 0; the first information may be of a character type; the first information may be of a character string type; the first information may be a combination of one or more bit values (for example, 0 or 1); the first information may be a bit, for example, 1 or 0; or the like.

For example, the location resource may include an identifier of the location request. Optionally, the location resource may further include at least one of the following: a GMLC uniform resource identifier (uniform resource identifier, URI), location quality of service (location quality of service, location QoS), a location type (location type), an identifier ((a subscription permanent identifier (subscription permanent identifier, SUPI)) or (a generic public subscription identifier (generic public subscription identifier, GPSI)) of a terminal device (for example, a located device), an access management network element identifier (AMF ID), a deferred location type (ldrtype), a location deferred request reference number, a cell identifier (cell ID) of the terminal device (for example, the located device), a positioning capability (ue positioning capability, or uepositioningcap for short) of the terminal device (for example, the located device), location information (ue location information, ULI) of the terminal device, area event information (area event info), motion event information (motion event info), periodic event information (periodic event info), and a global unique access network device identifier (global unique AMF identifier, GUAMI).

In an implementation scenario, the first information is from a location management network element. For example, after receiving a second message from the terminal device, the location management network element may generate the first information and send the first information to the access management network element.

In another implementation scenario, the first information is from the terminal device. For example, the terminal device may send a first message to the access management network element when starting canceling the location request, where the first message includes the first information.

In addition, the first message further includes the second message, and the second message is used to cancel the location request.

For example, the first message is an uplink non-access stratum transport (UL NAS TRANSPORT) message.

The second message carries information indicating to cancel the location request, or the second message is used to cancel the location request.

In this application, the location request may be referred to as a location service or location event request. The location request (location request) includes a single location request, an immediate (immediate) location request, and a deferred location request (deferred location request). The deferred location request may be triggered based on the following events: a terminal device available event (UE available event/UE availability), an area event (area event), a periodic location event (period location event), and a motion event (motion event). The area event includes an entering area event (entering area event), a leaving area (leaving area event), and a being inside area event (being inside area event).

Optionally, "canceling the location request" may be replaced with "canceling a location service", "canceling a location event (location event)", or "canceling location (cancel location)".

Optionally, the "location request" may be replaced with the "location service".

The second message includes the identifier of the location request.

For example, the identifier of the location request may also be referred to as an identifier of the location service, and the identifier of the location request is used to identify a deferred or periodic location request for the terminal device.

The identifier of the location request may be a location deferred request reference number (location deferred request reference number, LDR reference number) or a location service correlation identifier (location service correlation ID, LCS correlation ID).

For example, the second message may be a cancel location (cancel location) message, the second message may be a cancel deferred location (cancel deferred location) message, or the second message may be a cancel periodic location (cancel periodic location) message. In addition, the second message may alternatively be any one or more of the following:
registration request (registration request), registration modification (registration modification request), association request (association request), de-association request, association modification, attach request (attach request), de-attach request (de-attach request), attach modification, registration complete (registration complete), de-registration accept (deregistration accept), de-registration request (deregistration request), service request (service request), service reject (service reject), service accept (service accept), control plane service request (control plane service request), uplink non-access stratum transport (UL NAS transport), mobile originated location request (mobile originated location request, MO-LR), authentication response (authentication response), authentication failure (Authentication failure), configuration update complete (configuration update complete), identity response (identity response), notification response (notification response), security mode complete (security mode complete), security mode reject (security mode reject), security protected 5th-generation (5th-generation, 5G) mobile communication non-access stratum message (security protected 5GS NAS message), 5G mobility management status (5G mobility management status, 5GMM status), network slice-specific identity authentication complete (network slice-specific authentication complete), LTE positioning protocol (LTE positioning protocol, LPP) protocol data unit (LTE positioning protocol packet data unit, LPP PDU), new radio (new ratio, NR) protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), an NR message (NR message), an NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), PDU session establishment request (PDU session establishment request), PDU session modification request (PDU session modification request), PDU session release request (PDU session release request), remote UE report (remote UE report), NG setup request (NG setup request), transmission reception point information response (TRP information response), capability exchange (capability exchange), register SS (register SS), activate SS (activate SS), deactivate SS (deactivate SS), user service (userUserService), and the like.

It should be understood that, in this application, "indication (indicate/indication)" may be replaced with "presentation (present/represent)", "representation", "notification (notify/notification)", or the like.

S220: The access management network element releases the location resource based on the first information.

For example, after receiving the first information, the access management network element may delete the location resource corresponding to the location request in S210.

Based on the solution, in the cancel location procedure, the access management network element may receive the first information indicating to release the location resource for the location request, and release the location resource based on the first information, helping save storage space.

In an implementation scenario of the method 200, the first information is from the location management network element. The following uses FIG. 6 as an example to describe an information exchange process in the implementation scenario.

FIG. 6 is a diagram of a location method 300 according to an embodiment of this application. In the method 300 shown in FIG. 6, an example in which an access management network element is an AMF and a location management network element is an LMF is used. The method 300 may include the following steps.

S310: A terminal device sends a message #1 (an example of a first message) to the AMF, and correspondingly, the AMF receives the message #1.

When the terminal device starts canceling a location request, the terminal device may send a cancel location (cancel location) message (an example of a second message) to the LMF, where the cancel location message carries an identifier of the location request, and the cancel location message is used to start canceling the location request or canceling location or canceling a location service.

Specifically, the cancel location message is carried in the message #1 sent by the terminal device to the AMF. For example, the message #1 may be referred to as an uplink non-access stratum transport (uplink non-access stratum transport, UL NAS transport) message, and the uplink non-access stratum transport message may carry an identifier (for example, an LMF ID) of the location management network element.

In addition, the cancel location message may further include information such as cancel location (cancel location) information sent by the terminal device to the LMF and the identifier of the location request. The information is carried in a location service container (location service container, LCS container), and is forwarded by the AMF to the LMF, and the AMF does not identify the information.

"The terminal device sends the message #1 to the AMF" may be replaced with: The terminal device starts (initiated) canceling the location request, or the terminal initiates cancellation of location (initiate/instigate/invoke cancel location).

For example, the terminal device may start canceling the location request in the following scenario: The terminal device is powered off (powered off), or the terminal device cancels the location request based on an input of a user.

S320: The AMF sends a message #2 (an example of the second message) to the LMF, and correspondingly, the LMF receives the message #2.

Specifically, the message #2 may be an N1 message notification (Namf_Communication_N1MessageNotify), and the message #2 may include a cancel location request or cancel location and the identifier of the location request. The message #2 may alternatively be an NL1 message, and the message 2 may further include a message sent by the AMF to the LMF.

S310 and S320 may be considered as an implementation of S210.

S330: The LMF sends information #1 (an example of first information) to the AMF, and correspondingly, the LMF receives the information #1.

The information #1 is used by the AMF to release a location resource for the location request.

Specifically, the information #1 may be an information element. For example, the information #1 may be carried in an event notification (Nlmf_Location_EventNotify) message. The information #1 may alternatively be dedicated signaling. For example, the information #1 is a notification message used to notify releasing of the location resource. The information #1 may be of an enumeration type, for example, an enumerated value, where the enumerated value may be an integer; the information #1 may be of a Boolean type, for example, a Boolean value, where the Boolean value may be 1 or 0; the information #1 may be of a character type, for example, one character; the information #1 may be of a character string type, for example, a combination of one or more characters; or the information #1 may be a combination of one or more bit values, where the bit value may be 1 or 0. Further, for example, the information #1 may be of an event type (event type), for example, may be an enumerated value and an event description represented by the enumerated value. The event description may be releasing the location resource, releasing the location service, releasing the location request, releasing location, canceling the location resource, canceling the location service, canceling the location request, or canceling location.

S340: The AMF releases the location resource based on the information #1.

For specific descriptions of S340, refer to S220. Details are not described herein again.

Based on the solution, the LMF may indicate, when receiving the cancel location request from the terminal device, the AMF to release a resource for the location request, so that the AMF can release the location resource in time, to save storage space.

Optionally, before S310, the method 300 further includes: S301: The AMF receives the location resource from a gateway mobile location center (gateway mobile location center, GMLC). Further, the AMF may save the location resource.

For example, the location resource sent by the GMLC to the AMF may include at least one of the following: the identifier of the location request, a location type (location type), scheduled time (scheduledloctime), an application service identifier (AF ID), a terminal privacy requirement (ue privacy requirement), a notification uniform resource identifier (locationnotificationuri), a supported graphics display (lcssupportedGADshapes), a client type (lcsclienttype), a GMLC uniform resource identifier (uniform resource identifier, URI), location quality of service (location quality of service, location QoS), a location type (location type), an identifier ((a subscription permanent identifier (subscription permanent identifier, SUPI)) or (a generic public subscription identifier (generic public subscription identifier, GPSI)) of the terminal device (for example, a located device), an access management network element identifier (AMF ID), a deferred location type (ldrtype), a location deferred request reference number, a cell identifier (cell ID) of the terminal device (for example, the located device), a positioning capability (ue positioning capability, or uepositioningcap for short) of the terminal device (for example, the located device), location information (ue location information, ULI) of the terminal device, area event information (area event info), motion event information (motion event info), periodic event information (periodic event info), and a global unique access network device identifier (global unique AMF identifier, GUAMI).

The location resource saved by the AMF may be a part or all of the location resource from the GMLC.

Based on the solution, the access management network element may save the location resource, so that when the terminal device moves, the access management network element may continue executing the location request of the terminal device based on the location resource. In this way, continuity of the request of the terminal device can be ensured.

Optionally, the method 300 further includes: S302: The AMF sends information #2 (an example of fourth information) to the LMF, and correspondingly, the AMF receives the information #2.

The information #2 may indicate that the AMF has saved the location resource.

In other words, after saving (storing/keeping) or reserving (reserving) or storing the location resource, the AMF may indicate, to the LMF, that the location resource has been saved.

In an example, the information #2 is carried in a location determining request (Nlmf_Location_DetermineLocation Request) message, and the location determining request message may be used to request location information of the terminal device.

In another example, the information #2 is carried in dedicated signaling, and the dedicated signaling is used to notify that the AMF has saved the location resource.

Optionally, in an implementation, after S320, the LMF first determines whether the LMF receives the information #2. When receiving the information #2, the LMF performs S330. In other words, when receiving a cancel location request initiated by the terminal device, the LMF first determines whether the AMF has saved the location resource for the location request. Only when the AMF has saved the location resource, the LMF indicates the AMF to release the location resource.

In this manner, the LMF can be prevented from sending the information #1 unnecessarily, thereby saving resources.

Optionally, in another implementation, regardless of whether the LMF receives the information #2, the LMF performs S330 after S320. In other words, regardless of whether the AMF has saved the location resource for the location request, when receiving the cancel location request initiated by the terminal device, the LMF indicates the AMF to release the location resource.

In this manner, the LMF does not need to further determine a save status of the location resource. This is simple and efficient.

It should be understood that, in this application, "determine (determine)" may be replaced with "fine (find)" or "know (known/know/aware)".

Optionally, the method 300 further includes: The AMF determines that a type of the location request is a deferred location request.

For example, the AMF may determine, based on a type of the location request in the location resource sent by the GMLC, that the location request is a deferred (deferred) or periodic location request. Further, the AMF may send the information #2 to the LMF when the location request is the deferred or periodic location request. In other words, if the type of the location request is not the deferred or periodic location request, the AMF may not send the information #2.

For another example, the AMF may determine, based on a type of location or a location service or a location request, that the location or the location service or the location request is deferred (deferred) or periodic location or a deferred (deferred) or periodic location service or a deferred (deferred) or periodic location request. Further, the AMF may send the information #2 to the LMF when the location or the location service or the location request is the deferred or periodic location or the deferred or periodic location service or the deferred or periodic location request. In other words, if the location or the location service or the location request is not the deferred or periodic location or the deferred or periodic location service or the deferred or periodic location request, the AMF may not send the information #2.

In this manner, the AMF may indicate, to the LMF, a save status of a location resource for the deferred location request, so that the LMF can determine whether it needs to indicate to release the location resource. The LMF can be prevented from sending the information #1 unnecessarily, thereby saving resources.

For another example, when location or a location service or a location request is deferred location or a deferred location service or a deferred location request, the AMF may save a location resource for the location or the location service or the location request. In other words, if a type of the location or the location service or the location request is not the deferred or periodic location or the deferred or periodic location service or the deferred or periodic location request, the AMF may not save the location resource for the location or the location service or the location request.

In this manner, the AMF may save the location resource only when the location or the location service or the location request is the deferred or periodic location or the deferred or periodic location service or the deferred or periodic location request. In this way, signaling overheads caused by unnecessary saving can be reduced.

Optionally, before S302, the method 300 further includes: S303: The LMF sends information #3 (an example of third information) to the AMF, and correspondingly, the AMF receives the information #3.

The information #3 may be used to subscribe to a save notification of the location resource. The "save notification of the location resource" may be replaced with any one of the following: a reservation notification of the location resource, a storage notification of the location resource, a reserving notification of the location resource, a saving notification of the location resource, the location resource being saved, location resource saved, the location resource being not released, location resource storage, location resource reservation, and location resource saving.

For example, when receiving the location determining request (Nlmf_Location_DetermineLocation Request) message from the AMF, the LMF may send the information #3 to the AMF.

Optionally, the location determining request message may include a type of a location request or a location service or location, and the LMF may determine the type of the location request or the location service or the location based on the location determining request message. Further, when the type of the location request or the location service or the location is a deferred or periodic location request, the LMF may send the information #3 to the AMF. In other words, if the type of the location request or the location service or the location is not the deferred or periodic location request, the LMF may not send the information #3.

In this manner, the LMF subscribes to, from the AMF, a save status of a resource for the deferred or periodic location request or the deferred or periodic location service or the deferred or periodic location, to help the AMF make a decision, and achieve high efficiency.

Optionally, the LMF may send the information #1 to the AMF when the type of the location request is the deferred location request.

Optionally, before S330, the method 300 further includes: S304: The AMF sends information #4 (an example of second information) to the LMF, and correspondingly, the LMF receives the information #4.

The information #4 is used to subscribe to a cancellation notification of the location request. In other words, the information #4 is used to subscribe to a cancellation notification of the location. In other words, the information #4 is used to subscribe to a cancellation notification of the location service. In other words, the information #4 is used to subscribe to cancellation of the location. In other words, the information #4 is used to subscribe to cancellation of the location service. In other words, the information #4 is used to subscribe to cancellation of the location request. In other words, the information #4 is used to subscribe to release of the location. In other words, the information #4 is used to subscribe to release of the location service. In other words, the information #4 is used to subscribe to release of the location request. In other words, the information #4 is used to subscribe to location release. In other words, the information #4 is used to subscribe to location service release. In other words, the information #4 is used to subscribe to location request release.

In an example, the information #4 is carried in the location determining request (Nlmf_Location_DetermineLocation Request) message.

Optionally, the location determining request message may further carry at least one of the following information: a notification endpoint (notification endpoint) or a notification target address (notification target address), a notification correlation identifier (for example, a notification uniform resource locator (uniform resource locator, URL), notification URL), and a URI (for example, a callback URI), where the notification target address may be an internet protocol (Internet protocol, IP) address, a fully qualified domain name (fully qualified domain name, FQDN), or the like.

In another example, the information #4 is carried in an NL1 message, or the information #4 is carried in a message sent by the AMF to the LMF.

In an implementation, for example, the AMF may send the information #4 to the LMF when location or a location service or a location request is deferred or periodic location or a deferred or periodic location service or a deferred or periodic location request. In other words, if a type of the location or the location service or the location request is not the deferred or periodic location or the deferred or periodic location service or the deferred or periodic location request, the AMF may not send the information #4.

In this manner, the AMF subscribes to, from the LMF, a cancellation status of the deferred location or the deferred location service or the deferred location request, to help the LMF make a next decision, and achieve high efficiency.

Optionally, in an implementation, after S320, the LMF first determines whether the LMF receives the information #4. When receiving the information #4, the LMF performs S330. In other words, when receiving cancel location or a cancel location service or a cancel location request that is initiated by the terminal device, the LMF first determines whether the AMF subscribes to a cancellation notification of the location or the location service or the location request. Only when the AMF subscribes to the cancellation notification of the location or the location service or the location request, the LMF indicates the AMF to release the location resource.

In this manner, the LMF can be prevented from sending the information #1 unnecessarily, thereby saving resources.

Optionally, in another implementation, the LMF does not determine whether the LMF receives the information #4. The LMF performs S330 after S320. In other words, regardless of whether the AMF subscribes to the cancellation notification of the location or the location service or the location request, when receiving the cancel location or the cancel location service or the cancel location request that is initiated by the terminal device, the LMF indicates the AMF to release the location resource
In this manner, the LMF does not need to further determine whether the AMF subscribes to the cancellation notification of the location or the location service or the location request. This is simple and efficient.

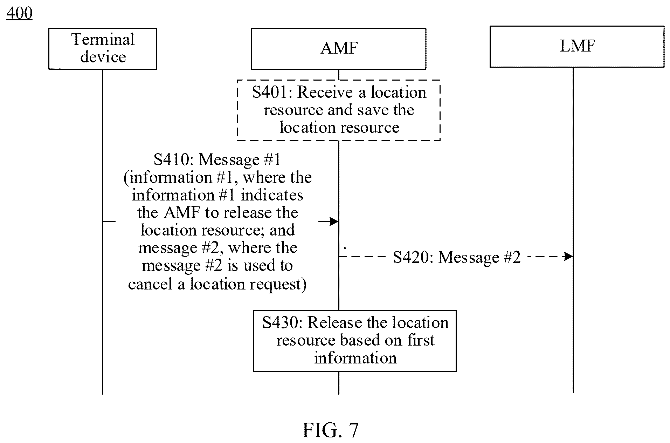

In an implementation scenario of the method 200, the first information is from the terminal device. The following uses FIG. 7 as an example to describe an information exchange process in the implementation scenario.

FIG. 7 is a diagram of a location method 400 according to an embodiment of this application. In the method 400 shown in FIG. 7, an example in which an access management network element is an AMF and a location management network element is an LMF is used. The method 400 may include the following steps.

S410: The terminal device sends a message #1 (an example of a first message) to the AMF, and correspondingly, the AMF receives the message #1.

S410 is basically similar to S310. A difference lies in that in S410, the message #1 further includes information #1 (an example of first information), where the information #1 may be of an enumeration type, for example, an enumerated value, where the enumerated value may be an integer; the information #1 may be of a Boolean type, for example, a Boolean value, where the Boolean value may be 1 or 0; the information #1 may be of a character type, for example, one character; the information #1 may be of a character string type, for example, a combination of one or more characters; or the information #1 may be a combination of one or more bit values, for example, one or more bit values (bits), where the bit value may be 1 or 0.

For other related descriptions of S410, refer to S310. Details are not described herein again.

Optionally, the method further includes: S420: The AMF sends a message #2 (an example of a second message) to the LMF, and correspondingly, the LMF receives the message #2.

S420 is basically similar to S320. For specific descriptions of S420, refer to S320. Details are not described herein again.

S430: The AMF releases a location resource based on the information #1.

For specific descriptions of S430, refer to S220. Details are not described herein again.

Based on the solution, the terminal device may indicate, while starting canceling a location request, the AMF to release a resource for the location request, so that the AMF can release the location resource in time, to save storage space.

Optionally, before S410, the method 400 further includes: S401: The AMF receives the location resource from a GMLC, and further, the AMF may save the location resource.

For specific descriptions of S401, refer to S301. Details are not described herein again.

Based on the solution, the access management network element may save the location resource, so that when the terminal device moves, the access management network element may continue executing the location request of the terminal device based on the location resource. In this way, continuity of the request of the terminal device can be ensured.

Optionally, the method 400 further includes: The AMF determines that a type of location or a location service or a location request is deferred or periodic location or a deferred or periodic location service or a deferred or periodic location request.

For example, the AMF may save a location resource for the location or the location service or the location request when the location or the location service or the location request is the deferred or periodic location or the deferred or periodic location service or the deferred or periodic location request. In other words, if the type of the location or the location service or the location request is not the deferred or periodic location or the deferred or periodic location service or the deferred or periodic location request, the AMF may not save the location resource for the location request.

In this manner, the AMF may save the location resource only when the location or the location service or the location request is the deferred or periodic location or the deferred or periodic location service or the deferred or periodic location request. In this way, signaling overheads caused by unnecessary saving can be reduced.

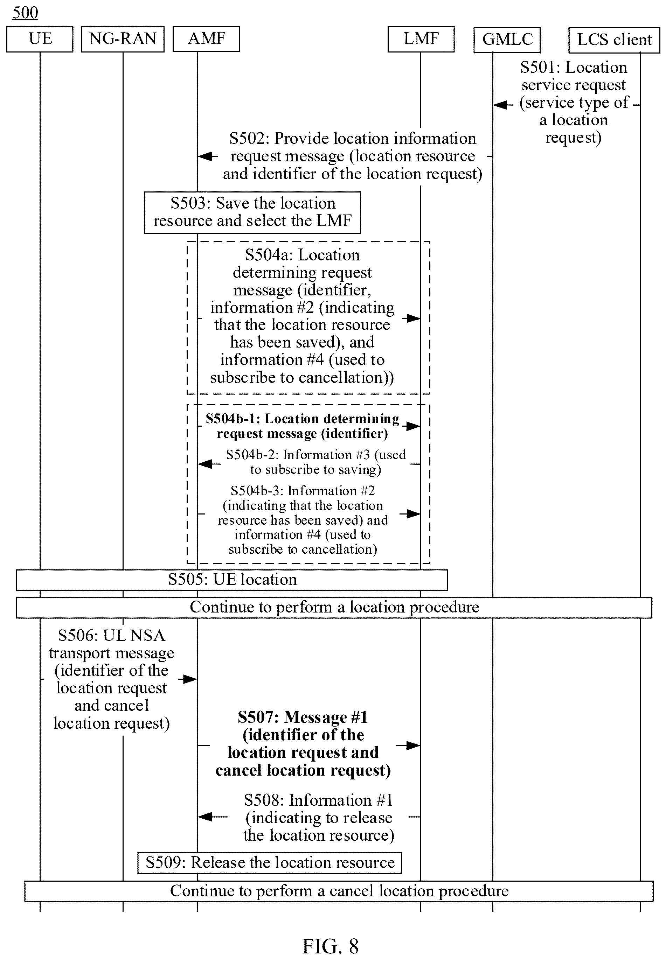

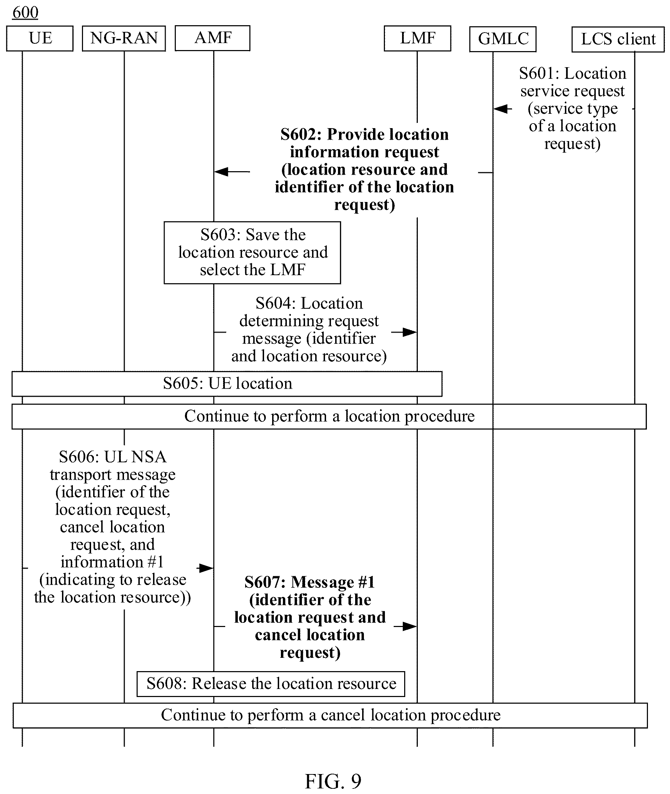

For ease of understanding, the following uses the network architecture shown in FIG. 2 as an example to describe the method in the foregoing embodiments with reference to FIG. 8 and FIG. 9.

FIG. 8 is a diagram of a location method 500 according to an embodiment of this application. For example, the method 500 shown in FIG. 8 may be considered as a specific implementation of the method 200 and the method 300. The method 500 may include the following steps.

S501: An LCS client sends a location service request message to a GMLC.

If the LCS client initiates a location service request, the LCS client sends the location service request (LCS Service Request) message to the GMLC. The message is used to request a location of UE.

The location service request message may carry a type of a location request, for example, deferred location or single location.

S502: The GMLC sends a provide location information request message to an AMF.

The GMLC may obtain, from a UDM, identifier/address information of the AMF serving the UE, and the GMLC may determine an identifier of the location request and a location resource for the location request based on the type of the location request and the identifier/address information of the AMF. Further, the GMLC may send the provide location information request message to the AMF, where the provide location information request message includes the identifier of the location request and the location resource for the location request.

S503: The AMF saves the location resource, and selects an LMF.

After receiving the location resource, the AMF may determine, based on the type of the location request, whether to save the location resource. For example, when determining that the location request is a deferred location request, the AMF saves the location resource.

In addition, the AMF may select the LMF based on the location of the UE, a type of the LCS client, and the like.

S502 and S503 may be considered as a specific implementation of S301.

Next, the AMF may indicate, to the LMF in the following two manners, that the location resource has been saved.

Manner 1: Step S504a is included.

S504a: The AMF sends a location determining request message to the LMF.

The location determining request message includes the location resource and information #2 (an example of fourth information), and the information #2 may indicate that the AMF has saved the location resource.

The step may be considered as a specific implementation of S302.

Manner 2: Step S504b-1, step S504b-2, and step S504b-3 are included.

S504b-1: The AMF sends a location determining request message to the LMF.

The location determining request message includes the location resource.

S504b-2: The LMF sends information #3 (an example of third information) to the AMF, where the information #3 may indicate to subscribe to saving information.

The step may be considered as a specific implementation of S303.

The LMF may determine that the location request is a deferred location request, and the LMF may send the information #3 to the AMF.

S504b-3: After receiving the information #3, the AMF sends information #2 (an example of fourth information) to the LMF, where the information #2 may indicate that the AMF has saved the location resource.

The step may be considered as another specific implementation of S302.

Optionally, if the AMF determines that the location request is the deferred location request, the AMF may further subscribe to location service cancellation information from the LMF.

Specifically, at least one step of S504a, S504b-1, or S504b-3 may include information #4 (an example of second information), where the information #4 is used to subscribe to a location service cancellation notification or subscribe to cancellation of a location service.

The steps may be considered as a specific implementation of S304.

S505: UE location.

After receiving a location request (for example, N1mf_Location_DetermineLocation) message sent by the AMF, the LMF may trigger UE location.

Next, network elements such as the UE, the AMF, the LMF, and the GMLC may continue to perform a location procedure.

S506: The UE starts a cancel location procedure.

For example, when the UE is powered off or the UE cancels the location request based on an input of a user, the UE may start the cancel location procedure.

Specifically, the UE may send a cancel location (cancel location) message to the LMF, where the cancel location message carries an identifier of the location request.

The location cancel message is carried in an uplink non-access stratum transport (uplink non-access stratum transport, UL NAS transport) message sent to the AMF.

Optionally, before S506, if the UE is in an idle state, the UE may first initiate a service request to return to a connected state, and then perform S506.

The step may be considered as a specific implementation of S310.

S507: The AMF forwards the cancel location (cancel location) message to the LMF.

The step may be considered as a specific implementation of S320.

S508: The LMF sends information #1 to the AMF, where the information #1 is used by the AMF to release a location resource for the location request.

For example, if the LMF has received the information #4 corresponding to the identifier of the location request, the LMF sends the information #1 to the AMF when receiving the cancel location (cancel location) message.

For another example, if the LMF has received the information #2 corresponding to the identifier of the location request, the LMF sends the information #1 to the AMF when receiving the cancel location (cancel location) message.

For still another example, the LMF directly sends the information #1 to the AMF when receiving the cancel location (cancel location) message.

The step may be considered as a specific implementation of S330.

S509: The AMF releases, based on an indication of the information #1, the location resource corresponding to the identifier of the location request.

The step may be considered as a specific implementation of S340.

FIG. 9 is a diagram of a location method 600 according to an embodiment of this application. For example, the method 600 shown in FIG. 9 may be considered as a specific implementation of the method 200 and the method 400. The method 600 may include the following steps.

S601: An LCS client sends a location service request message to a GMLC.

If the LCS client initiates a location service request, the LCS client sends the location service request (LCS Service Request) message to the GMLC. The message is used to request a location of UE.

The location service request message may carry a type of a location request, for example, deferred location or single location.

S602: The GMLC sends a provide location information request message to an AMF.

The GMLC may obtain, from a UDM, identifier/address information of the AMF serving the UE, and the GMLC may determine an identifier of the location request and a location resource for the location request based on the type of the location request and the identifier/address information of the AMF. Further, the GMLC may send the provide location information request message to the AMF, where the provide location information request message includes the identifier of the location request and the location resource for the location request.

S603: The AMF saves the location resource, and selects an LMF.

After receiving the location resource, the AMF may determine, based on the type of the location request, whether to save the location resource. For example, when determining that the location request is a deferred location request, the AMF saves the location resource.

In addition, the AMF may select the LMF based on the location of the UE, a type of the LCS client, and the like.

S602 and S603 may be considered as a specific implementation of S401.

S604: The AMF sends a location determining request message to the LMF.

The location determining request message includes the location resource.

S605: UE location.

After receiving the location determining (for example, Nlmf_Location_DetermineLocation) message sent by the AMF, the LMF may trigger UE location.

Next, network elements such as the UE, the AMF, the LMF, and the GMLC may continue to perform a location procedure.

S606: The UE starts a cancel location procedure.

For example, when the UE is powered off or the UE cancels the location request based on an input of a user, the UE may start the cancel location procedure.

Specifically, the UE may send a cancel location (cancel location) message to the LMF, where the cancel location message carries an identifier of the location request.

The cancel location message is carried in an uplink non-access stratum transport (uplink non-access stratum transport, UL NAS transport) message and information #1 sent to the AMF, where the information #1 is used by the AMF to release a location resource for the location request.

Optionally, before S606, if the UE is in an idle state, the UE may first initiate a service request to return to a connected state, and then perform S606.

The step may be considered as a specific implementation of S410.

S607: The AMF forwards the cancel location (cancel location) message to the LMF.

The step may be considered as a specific implementation of S420.

S608: The AMF releases, based on an indication of the information #1, the location resource corresponding to the identifier of the location request.

The step may be considered as a specific implementation of S430.

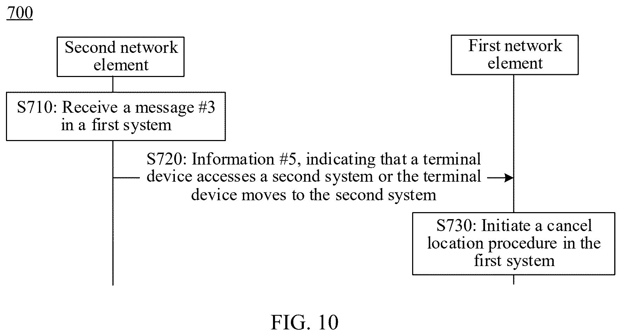

FIG. 10 is a diagram of a location method 700 according to an embodiment of this application. The method 700 may include the following steps.

S710: A second network element receives a message #3 (an example of a third message) in a first system.

The message #3 indicates that a terminal device accesses a second system, the terminal device moves to the second system, the first system is switched to the second system, or the terminal device is handed over from the first system to the second system.

It should be understood that, in this application, the "first system" may be replaced with any one of a "first communication network", a "first network", a "first communication system", a "source system", a "source network", and the like. The first system may be understood as a source communication system in which the terminal device is located or to which the terminal device accesses before a handover. Similarly, the "second system" may be replaced with any one of a "second communication network", a "second network", a "second communication system", a "target system", a "target network", and the like. The second system may be understood as a target communication system in which the terminal device is located or to which the terminal device accesses after the handover.

That the terminal device accesses the second system may be understood as that the second system provides a communication service for the terminal device. The terminal device accesses (access to) the second system. In other words, the terminal device is handed over to (handover to) the second system, the terminal device is camped on (camped on) the second system, the terminal device is handed over from the first system to the second system, the terminal device moves from the first system to the second system, the terminal device moves to the second system, the terminal device is located in the second system, or the terminal device is in the second system.

The terminal device moves to the second system. In other words, the terminal device is handed over to the second system, the terminal device moves from the first system to the second system, the terminal device is handed over from the first system to the second system, the terminal device is in a process of being handed over from the first system to the second system, the terminal device moves to an access network device of the second system, or the terminal device moves from an access network device of the first system to the access network device of the second system.

Specifically, if the first system is a 5th generation system (5G system, 5GS), the second system is an evolved packet system (evolved packet system, EPS), the access network device of the first system may be an NG-RAN or a RAN, and the access network device of the second system may be an E-UTRAN. If the first system is an evolved packet system, the second system is a 5th generation system, a future communication system, a future communication network, or a future network (for example, 6G or 7G), the access network device of the first system may be an E-UTRAN, and the access network device of the second system may be an NG-RAN or a RAN.

For example, the second network element is an access management network element of the first system.

Optionally, the message #3 is from the access network device of the first system.

In an example, the first system is the 5th generation system (5th generation system, 5GS), and the second system is the evolved packet system evolved packet system (evolved packet system, EPS).

In the example, a first network element may be a location management network element, and the second network element may be the access management network element.

In the example, that the second network element receives the message #3 in the first system in S710 includes: The terminal device receives the message #3 from the NG-RAN or an MME.

In the example, the message #3 (for example, the third message) may be any one of the following: a relocation complete notification (Relocation Complete Notification) message, a relocation response (Relocation response) message, or a handover required (handover required) message.

In another example, the first system is the evolved packet system, and the second system is the 5th generation system.

In the example, the first network element may be a mobility management entity, and the second network element may be an enhanced serving mobile location center network element.

In the example, that the second network element receives the message #3 in the first system in S710 includes: The second network element receives the message #3 from an AMF or a base station.

In the example, the message #3 (for example, the third message) may be any one of the following: a forward relocation response (Forward Relocation Response) message, a forward relocation complete notification (Forward Relocation Complete Notification) message, or a handover required (handover required) message.

Optionally, the first system and the second system in this application each may be a 5GS, or the first system and the second system in this application each may be an EPS. In other words, this application is also applicable to a scenario in which the terminal device is handed over within the 5GS or the EPS.

S720: The second network element sends information #5 (an example of fifth information) to the first network element, and correspondingly, the first network element receives the information #5.

The information #5 indicates that the terminal device accesses the second system or the terminal device moves to the second system.

For example, the information #5 may be a handover indication/notification (handover indication/notification), a handover complete indication/notification (handover complete notification/indication), a notification notifying that the terminal device is handed over from the first system to the second system, a notification notifying that the terminal device moves from the first system to the second system, or a notification notifying that the first system is switched to the second system (for example, a 5GS to EPS handover notification).

For example, the information #5 may be a handover indication/notification (handover indication/notification), a handover complete indication/notification (handover complete notification/indication), a notification notifying that the terminal device is handed over from the first system to the second system, a notification notifying that the terminal device moves from the first system to the second system, a notification notifying that the first system is switched to the second system (for example, a 5GS to EPS handover notification), or the like.

For example, the information #5 may be of an event type (event type), where the event type may be an enumeration type or an enumerated value, and the enumerated value may be an integer; the information #5 may be of a Boolean type or a Boolean value, where the Boolean value may be 1 or 0; the information #5 may be a character string, for example, may be one or more characters; the information #5 may be a character, for example, may be one character; or the information #5 may be a combination of one or more bits (for example, 1 or 0).

For related explanations of "the terminal device accesses the second system" and "the terminal device moves to the second system", refer to S710.

Optionally, the second network element may send the information #5 to the first network element after the message #3 indicates that handover of the terminal device is completed. The information #5 may indicate that the handover of the terminal device is completed or indicate a handover notification of the terminal device.

For example, the first network element is the location management network element of the first system.

In an example, the first system is the 5th generation system (5th generation system, 5GS), and the second system is the evolved packet system (evolved packet system, EPS).

In the example, the information #5 may be carried in a location event notification message (Namf_Location_Event Notify), may be carried in an event exposure notification message (Namf_EventExposure Notify), or may be carried in a notification (notification) message.

In the example, the information #5 may be of an event type, for example, may be a handover event, a 5GS to 4PS handover event, or the like.

In another example, the first system is the evolved packet system, and the second system is the 5th generation system.

In the example, the information #5 may be carried in a subscriber location report (subscriber location report) message, may be carried in a message sent by the MME to an E-SMLC, or may be carried in a location release message (location abort).

Alternatively, in the example, after receiving the message #3, the MME directly sends a location release message (location abort) to an E-SMLC.

S730: The first network element initiates a cancel location procedure (cancel location procedure) in the first system.

Specifically, initiating the cancel location procedure in the first system may be: starting canceling a location request, canceling a location service, or canceling location, triggering each node in the first system to release a location resource, or triggering the first network element to release the location resource.

For example, that the first network element initiates the cancel location procedure in the first system includes: The first network element releases a location resource of the terminal device in the first system.

For example, that the first network element initiates the cancel location procedure in the first system includes: The first network element releases the location resource.

Based on the solution, when the terminal device accesses the second system or moves to the second system, the first network element may trigger, in time, the node in the first system to release the location resource, to help save network resources.

Optionally, the method 700 further includes: The first network element sends information #6 (an example of sixth information) to the second network element in the first system, and correspondingly, the second network element receives the information #6.

The information #6 is used to subscribe to the fifth information. In other words, the information #6 is used to subscribe to a handover notification, the information #6 is used to subscribe to handover from the first system to the second system, or the information #6 is used to subscribe to a notification of handover from the first system to the second system.

For example, the first system is the 5GS, the second system is the EPS, the information #6 is carried in an event exposure (Namf_EventExposure) message, and the event exposure message is used to subscribe to an event notification.

For example, the first system is the EPS, the second system is the 5GS, and the information #6 is carried in a subscription message related to the _EPS.

Optionally, the first network element sends the information #6 to the second network element if at least one of the following conditions is met.

Condition 1: The first network element determines that an access type allowed by the terminal device for event reporting includes an access type of the second system.

That the first network element determines that the access type allowed by the terminal device for event reporting includes the access type of the second system may be replaced with that the first network element finds that the access type allowed by the terminal device for event reporting includes the access type of the second system, or may be replaced with that the access type allowed by the terminal device for event reporting includes the access type of the second system. In this application, "determine (determine)" may be replaced with "find (find)".

The access type allowed by the terminal device for event reporting (the allowed access type for event reporting) may also be referred to as the access type supported by the terminal device for event reporting (the access type supported by the UE for event reporting), may be referred to as an access type in which the terminal device can perform event reporting, or may be referred to as an access type in which the terminal device can perform reporting.

The access type (access type) allowed by the terminal device for event reporting may include an NR, a 5GS access type, an NG-RAN, LTE, an EPS access type, an EUTRAN, a 6th generation system (6th generation system, 6GS) access type, a satellite (satellite), a non-3GPP access type (for example, a wireless local area network (wireless local area network, WLAN)), and an EUTRAN connected to an EPC (EUTRAN connected to EPC).

If the second system is the 5GS, the access type of the second system may include the 5GS access type (access type), the NG-RAN, or a RAN.

If the second system is the EPS, the access type of the second system may include the EPS access type (access type) or the EUTRAN.

Condition 2: The first network element determines that a type of a location request of the terminal device is a deferred location request.

For descriptions of the "type of the location request" and the "deferred location request", refer to the method 200. Details are not described herein again.

Optionally, before the first network element sends the information #6 to the second network element, the method further includes: The second network element sends a message #4 to the first network element, and correspondingly, the first network element receives the message #4.

The message #4 is used to request a location of the terminal device, or is used to request location information of the terminal device.

Optionally, the message #4 may include the access type allowed by the terminal device for event reporting, or the message #4 includes the type of the location request of the terminal device. When the access type allowed by the terminal device for event reporting includes the access type of the second system, or when the type of the location request of the terminal device is the deferred location request, the second network element may send the information #6 to the first network element, to subscribe to the handover notification of the terminal device.

In an example, the first system is the 5th generation system, and the second system is the evolved packet system. In this case, the message #4 may be a location determining request (Nlmf_Location_DetermineLocation Request) message, and the location determining request message is used to request the location information of the terminal device.

In another example, the first system is the evolved packet system, and the second system is the 5th generation system. In this case, the message #4 may be a location request (LCS-AP Location Request) message, and the location request message is used to request the location information of the terminal device. Alternatively, the message #4 may be a periodic or deferred location-triggered return message (periodic-triggered invoke return result), where the periodic or deferred location-triggered return message is used by the terminal to send periodic or deferred location to a network.

Optionally, the method 700 further includes: The first network element sends information #7 to a gateway mobile location center network element, where the information #7 indicates that the terminal device accesses a second communication network or the terminal device moves to the second communication network.

For example, the first system is the 5GS, the second system is the EPS, and the information #7 is carried in an event exposure (Nlmf_EventNotify) message. The information #7 may be the same as the information #5.

For example, the first system is the EPS, the second system is the 5GS, and the information #7 is carried in an Nlmf_Location_EventNotify message or may be carried in a message sent by the location management network element to the gateway mobile center network element.

In other words, after receiving the handover notification of the terminal device, the first network element may indicate the handover notification of the terminal device to the GMLC, so that the GMLC starts a location service for the terminal device in a target network.

Optionally, the method 700 further includes: The second network element sends information #8 (an example of eighth information) to the gateway mobile location center network element, where the information #8 indicates that the terminal device accesses the second communication network or the terminal device moves to the second communication network, and the information #8 may be the same as the information #5.

In other words, after receiving the message #3, the second network element may alternatively indicate the handover notification of the terminal device to the GMLC, so that the GMLC starts a location service for the terminal device in a target network.

Optionally, the method 700 further includes: The second network element receives a location resource from the first network element, and determines an address of the gateway mobile location center network element based on the location resource.

Specifically, the second network element may obtain, from the first network element, whether the location resource of the terminal device exists. When the location resource exists, the second network element may learn, from the location resource, information such as an identifier of the location request, and the address of the GMLC corresponding to the location request or the location service. Further, the second network element may indicate the handover notification of the terminal device, for example, the information #5, to the GMLC.

Optionally, the method 700 further includes: The second network element sends information #9 (an example of ninth information) to the first network element in the first system, and correspondingly, the first network element receives the information #9.

The information #9 is used to request the location resource.

Further, the first network element may send the location resource to the second network element in the first system based on a request of the information #9.

In an example, the first system is the 5th generation system, and the second system is the evolved packet system. In this case, in the example, the information #8 may be carried in Namf_EventExposure subscribe, and the information #9 may be carried in Namf_EventExposure notify.

In another example, the first system is the evolved packet system, and the second system is the 5th generation system. In this case, in the example, the information #8 may be carried in Subscriber Location Report, and the information #9 may be carried in a message sent by an E-SMF to the MME.

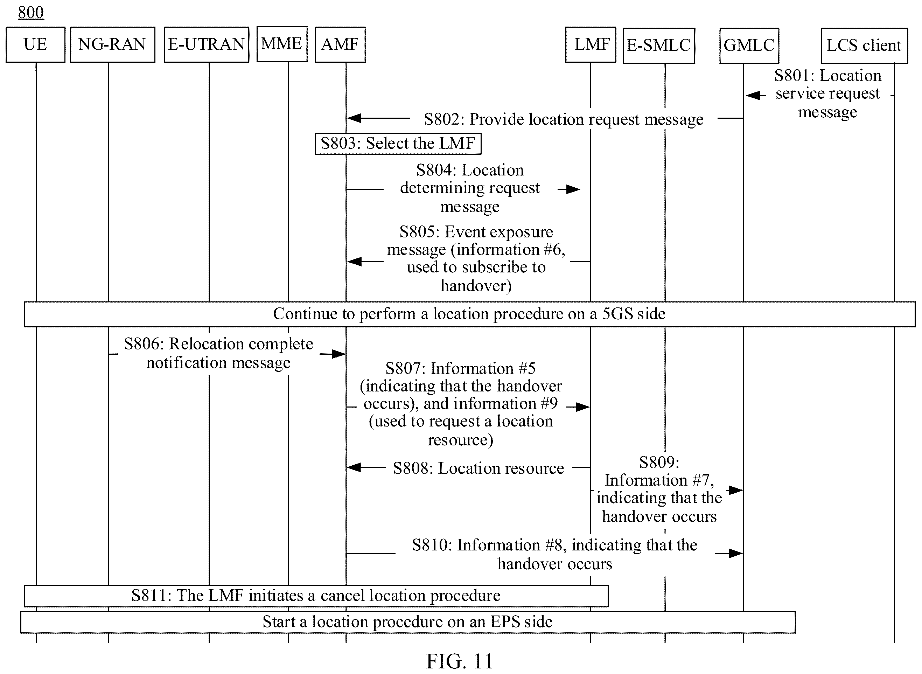

In an implementation scenario of the method 700, the first system is the 5th generation system, and the second system is the evolved packet system. The following uses FIG. 11 as an example to describe an information exchange process in this implementation scenario. In the implementation scenario, a second network element may be an AMF, and a first network element may be an LMF.

FIG. 11 is a diagram of a location method 800 according to an embodiment of this application. As shown in FIG. 11, the method 800 includes the following steps.

S801: An LCS client sends a location service request message to a GMLC.

If the LCS client initiates a location service request, the LCS client sends the location service request (LCS Service Request) message to the GMLC. The message is used to request a location of UE.

The location service request message may carry a type of a location request, for example, deferred location or single location.

S802: The GMLC sends a provide location information request message to an AMF.

The GMLC may obtain, from a UDM, identifier/address information of the AMF serving the UE, and the GMLC may determine an identifier of the location request and a location resource for the location request based on the type of the location request and the identifier/address information of the AMF. Further, the GMLC may send the provide location information request message to the AMF, where the provide location information request message includes the identifier of the location request and the location resource for the location request.

The location resource may include an address or an identifier of the GMLC.

S803: The AMF selects the LMF.

After receiving the location resource, the AMF may select the LMF based on information in the location resource, the location of the UE, a type of the LCS client, and the like.

S804: The AMF sends a location determining request message to the LMF.

The location determining request message includes the location resource and/or an access type allowed by a terminal device for event reporting.

S805: The LMF sends information #6 to the AMF, where the information #6 is used to subscribe to a handover notification of the UE.

The LMF may send the information #6 to the AMF when an access type allowed by the UE for event reporting includes an EPS access type, or when a type of a location request of the UE is a deferred location request.

Next, network elements such as the UE, the AMF, the LMF, and the GMLC may continue to perform a location procedure of a 5GS.

S806: An NG-RAN sends a relocation complete notification (Relocation Complete Notification) message (an example of a third message) to the AMF.

When the UE is handed over from the 5GS to an EPS, the NG-RAN sends the relocation complete notification message to the AMF.

S807: The AMF sends information #5 to the LMF, where the information #5 indicates that the UE is handed over.

For example, the AMF sends the information #5 to the LMF based on a subscription of the LMF in S805.

Optionally, if the AMF has not saved the location resource or has released the location resource, in S807, the AMF may further send information #9 to the LMF, where the information #9 is used to request the location resource.

S808: The LMF sends the location resource to the AMF.

The LMF may determine, based on the information #9, whether the location resource of the UE exists, and send the location resource to the AMF when the location resource of the UE exists.

S809: The LMF sends information #7 to the GMLC, where the information #7 indicates that the UE is handed over.

The LMF may further send a handover notification to the GMLC when receiving the information #5.

Alternatively, in S810, the AMF sends information #8 to the GMLC, where the information #8 indicates that the UE is handed over.

Optionally, the AMF may determine the address of the GMLC based on the location resource obtained from the LMF, and then send a handover notification to the GMLC.

The information #8 may be carried in a location event notification message.

S811: The LMF initiates a cancel location procedure.

The LMF may learn, based on the information #5, that the UE is handed over. After the handover is completed or in a handover process, the LMF may initiate the cancel location procedure in the 5GS, to release location resources in nodes such as the NG-RAN and the LMF. Network elements such as the UE, the NG-RAN, the AMF, an E-UTRAN, and an MME may continue to perform a handover procedure of the UE from the 5GS to the EPS.

Then, network elements such as the GMLC, an E-SMLC, the E-UTRAN, and the MME may continue to perform a location procedure on an EPS side.

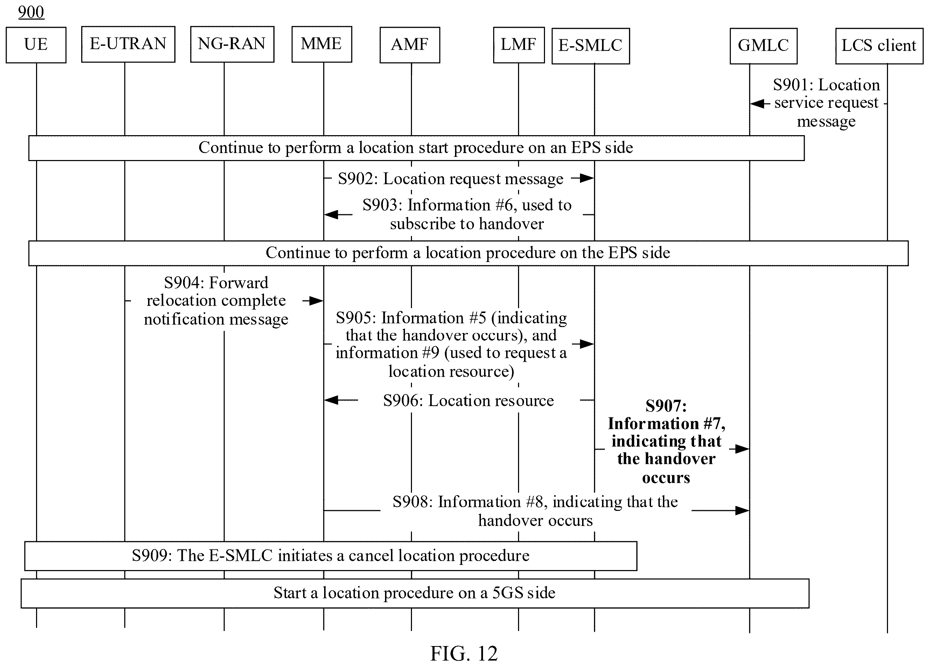

In another implementation scenario of the method 200, the first system is the evolved packet system, and the second system is the 5th generation system. The following uses FIG. 12 as an example to describe an information exchange process in this implementation scenario. In this implementation scenario, a second network element may be an MME, and a first network element may be an E-SMLC.

FIG. 12 is a diagram of a location method 900 according to an embodiment of this application. As shown in FIG. 12, the method 900 includes the following steps.

S901: An LCS client sends a location service request message to a GMLC.

If the LCS client initiates a location service request, the LCS client sends the location service request (LCS Service Request) message to the GMLC. The message is used to request a location of UE.

The location service request message may carry a type of a location request, for example, deferred location or single location.

A location service (for example, deferred or periodic location) is started on an EPS side. For example, network elements such as the UE, the MME, and the GMLC start a location procedure of an EPS.

S902: The MME sends a location request (LCS-AP Location Request) message to the E-SMLC.

The location request (LCS-AP Location Request) message includes a location resource and/or an access type allowed by a terminal device for event reporting.

S903: The E-SMLC sends information #6 to the MME, where the information #6 is used to subscribe to a handover notification of the UE.

The E-SMLC may send the information #6 to the MME when an access type allowed by the UE for event reporting includes a 5GS access type, or when a type of a location request of the UE is a deferred location request.

Then, network elements such as the UE, the MME, the E-SMLC, and the GMLC may continue to perform the location procedure of the EPS.

S904: An E-UTRAN sends a forward relocation complete notification (Forward Relocation Complete Notification) message (an example of a third message) to the MME.

When the UE is handed over from the EPS to a 5GS, the E-UTRAN sends the relocation complete notification message to the MME.

S905: The MME sends information #5 to the E-SMLC, where the information #5 indicates that the UE is handed over.

For example, the MME sends the information #5 to the E-SMLC based on a subscription of the E-SMLC in S905.

Optionally, if the MME has not saved the location resource or has released the location resource, in S905, the MME may further send information #9 to the E-SMLC, where the information #9 is used to request the location resource.

S906: The E-SMLC sends the location resource to the MME.

The E-SMLC may determine, based on the information #9, whether the location resource of the UE exists, and send the location resource to the MME when the location resource of the UE exists.

S907: The E-SMLC sends information #7 to the GMLC, where the information #7 indicates that the UE is handed over.

The E-SMLC may further send a handover notification to the GMLC when receiving the information #5.

Alternatively, in S908, the MME sends information #8 to the GMLC, where the information #8 indicates that the UE is handed over.

Optionally, the MME may determine an address of the GMLC based on the location resource obtained from the E-SMLC, and then send a handover notification to the GMLC.

S909: The E-SMLC initiates a cancel location procedure.

The E-SMLC may learn, based on the information #5, that the UE is handed over. After the handover is completed or in a handover process, the E-SMLC may initiate the cancel location procedure of the 5GS, to release location resources in nodes such as an NG-RAN and the E-SMLC.

Network elements such as the UE, the NG-RAN, the AMF, the E-UTRAN, and the MME may continue to perform a handover procedure of the UE from the 5GS to the EPS.

Next, network elements such as the GMLC, the NG-RAN, the AMF, and the LMF may continue to perform a location procedure on a 5GS side.

It should be understood that, in the methods 700 to 900, an example in which the first system is the 5th generation system is used for description. It should be understood that the first system may alternatively be a 6GS. In other words, the solutions in embodiments of this application are applicable to a scenario of handover between the EPS and the 6GS.

It should be further understood that the methods 700 to 900 are described by using an example in which the EPC-GMLC and the 5GC-GMLC are co-deployed. However, the location method in this application is also applicable to a scenario in which the EPC-GMLC and the 5GC-GMLC are not co-deployed shown in FIG. 4. In the scenario in which the EPC-GMLC and the 5GC-GMLC are not co-deployed, in the methods 700 to 900, the GMLC interacting with the AMF or the LMF may be understood as the 5GC-GMLC, and the GMLC interacting with the MME or the E-SMLC may be understood as the EPC-GMLC. The 5GC-GMLC and the EPC-GMLC may exchange the handover notification of the UE, namely, the information #7 or the information #8. In this way, when the GMLC is separately deployed, it can be ensured that a source system releases a location resource in time, and storage space is saved.

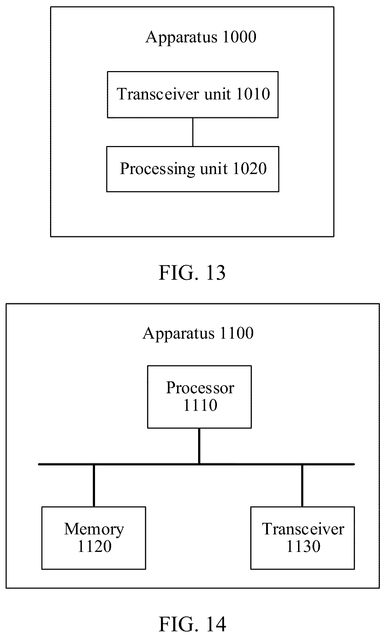

FIG. 13 is a diagram of a location apparatus 1000 according to an embodiment of this application.

The apparatus 1000 includes a transceiver unit 1010 and a processing unit 1020. The transceiver unit 1010 may be configured to implement a corresponding communication function. The transceiver unit 1010 may also be referred to as a communication interface or a communication unit. The processing unit 1020 may be configured to perform data processing.

Optionally, the apparatus 1000 further includes a storage unit. The storage unit may be configured to store instructions and/or data. The processing unit 1020 may read the instructions and/or the data in the storage unit, so that the apparatus implements actions of different devices in the foregoing method embodiments, for example, actions of the first device, the first network element, or the mobility management entity.

In an example, the apparatus 1000 is configured to perform actions performed by the terminal device in the foregoing method embodiments, and the apparatus 1000 may include units configured to perform the methods performed by the terminal device in the foregoing method embodiments.

In this case, the apparatus 1000 may be the terminal device or a component of the terminal device. The transceiver unit 1010 is configured to perform receiving and sending-related operations on a terminal device side or a UE side in the foregoing method embodiments (for example, the method 200, the method 300, the method 400, the method 500, the method 600, the method 700, the method 800, and the method 900). The processing unit 1020 is configured to perform a processing-related operation on the terminal device side or the UE side in the foregoing method embodiments (for example, the method 200, the method 300, the method 400, the method 500, the method 600, the method 700, the method 800, and the method 900).

The apparatus 1000 may implement corresponding steps or procedures performed by the terminal device or the UE in the method embodiments according to embodiments of this application.

It should be understood that specific processes of performing the foregoing corresponding steps by the units are described in detail in the foregoing method embodiments. For brevity, details are not described herein again.

In an example, the apparatus 1000 is configured to perform actions performed by the access management network element, the second network element, the AMF, or the MME in the foregoing method embodiments. The apparatus 1000 may include units configured to perform the methods performed by the access management network element, the second network element, the AMF, or the MME in the foregoing method embodiments.

In this case, the apparatus 1000 may be the access management network element, the second network element, the AMF, or the MME, and a component thereof. The transceiver unit 1010 is configured to perform receiving and sending-related operations on an access management network element side, a second network element side, an AMF side, or an MME side in the foregoing method embodiments (for example, the method 200, the method 300, the method 400, the method 500, the method 600, the method 700, the method 800, and the method 900). The processing unit 1020 is configured to perform a processing-related operation on the access management network element side, the second network element side, the AMF side, or the MME side in the foregoing method embodiments (for example, the method 200, the method 300, the method 400, the method 500, the method 600, the method 700, the method 800, and the method 900).

The apparatus 1000 may implement corresponding steps or procedures performed by the access management network element, the second network element, the AMF, or the MME in the method embodiments according to embodiments of this application.

It should be understood that specific processes of performing the foregoing corresponding steps by the units are described in detail in the foregoing method embodiments. For brevity, details are not described herein again.

In an example, the apparatus 1000 is configured to perform actions performed by the location management network element, the first network element, the E-SMLC, or the LMF in the foregoing method embodiments. The apparatus 1000 may include units configured to perform the methods performed by the location management network element, the first network element, the E-SMLC, or the LMF in the foregoing method embodiments.

In this case, the apparatus 1000 may be the location management network element, the first network element, the E-SMLC, or the LMF, and a component thereof. The transceiver unit 1010 is configured to perform receiving and sending-related operations on a location management network element side, a first network element side, an E-SMLC side, or an LMF side in the foregoing method embodiments (for example, the method 200, the method 300, the method 400, the method 500, the method 600, the method 700, the method 800, and the method 900). The processing unit 1020 is configured to perform a processing-related operation on the location management network element side, the first network element side, the E-SMLC side, or the LMF side in the foregoing method embodiments (for example, the method 200, the method 300, the method 400, the method 500, the method 600, the method 700, the method 800, and the method 900).

The apparatus 1000 may implement corresponding steps or procedures performed by the location management network element, the first network element, the E-SMLC, or the LMF in the method embodiments according to embodiments of this application.

It should be understood that specific processes of performing the foregoing corresponding steps by the units are described in detail in the foregoing method embodiments. For brevity, details are not described herein again.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 1000 in the foregoing solutions has a function of implementing corresponding steps performed by the terminal device or the UE in the foregoing methods, the apparatus 1000 in the foregoing solutions has a function of implementing corresponding steps performed by the access management network element, the second network element, the AMF, or the MME in the foregoing methods, or the apparatus 1000 in the foregoing solutions has a function of implementing corresponding steps performed by the access management network element, the second network element, the AMF, or the MME in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving-sending operations and a related processing operation in the method embodiments.

In addition, the transceiver unit 1010 may alternatively be a transceiver circuit (for example, the transceiver circuit may include a receiving circuit and a sending circuit), and the processing unit may be a processing circuit.

It should be noted that the apparatus in FIG. 13 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 14 is a diagram of a location apparatus 1100 according to an embodiment of this application. The apparatus 1100 includes a processor 1110. The processor 1110 is coupled to a memory 1120. The memory 1120 is configured to store a computer program or instructions and/or data. The processor 1110 is configured to execute the computer program or the instructions stored in the memory 1120 or read the data stored in the memory 1120 to perform the methods in the foregoing method embodiments. Optionally, as shown in FIG. 11, the apparatus 1100 further includes a transceiver 1130. The transceiver 1130 is configured to receive and/or send a signal. For example, the processor 1110 is configured to control the transceiver 1130 to receive and/or send the signal.

Optionally, there are one or more processors 1110.

Optionally, there are one or more memories 1120.

Optionally, the memory 1120 and the processor 1110 are integrated together or separately disposed.

The apparatus 1100 is configured to implement operations performed by the terminal device, the access management network element, the second network element, the location management network element, and the first network element in the foregoing method embodiments.

For example, the processor 1110 is configured to execute the computer program or the instructions stored in the memory 1120, to implement related operations performed by the terminal device or the UE in the foregoing method embodiments, for example, the method performed by the terminal device in any one of embodiments shown in FIG. 5 to FIG. 7, or the method performed by the UE in any one of embodiments shown in FIG. 8 and FIG. 9.

For another example, the processor 1110 is configured to execute the computer program or the instructions stored in the memory 1120, to implement related operations of the access management network element, the second network element, the AMF, or the MME or the first network element in the foregoing method embodiments, for example, the method performed by the access management network element, the second network element, the AMF, or the MME in any one of embodiments shown in FIG. 5 to FIG. 12.

For another example, the processor 1110 is configured to execute the computer program or the instructions stored in the memory 1120, to implement related operations of the location management network element, the first network element, the E-SMLC, or the LMF in the foregoing method embodiments, for example, the method performed by the location management network element, the first network element, the E-SMLC, or the LMF in any one of embodiments shown in FIG. 5 to FIG. 12.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a communication system. The communication system includes the access management network element and the location management network element in the foregoing embodiments, or includes the first network element and the second network element in the foregoing embodiments.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that the UE or the base station performs corresponding processing in an objective situation, are not intended to limit time, do not require the UE or the base station to necessarily perform a determining action during implementation, and do not mean another limitation.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification.

The term "at least one of..." in this specification represents all or any combination of listed items. For example, "at least one of A, B, and C" may represent the following six cases: Only A exists, Only B exists, Only C exists, both A and B exist, both B and C exist, and all A, B, and C exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A location method, comprising:
receiving, by an access management network element, first information in a cancel location procedure, wherein the first information indicates the access management network element to release a location resource for a location request; and
releasing, by the access management network element, the location resource based on the first information.

2. The method according to claim 1, wherein receiving, by the access management network element, the first information in the cancel location procedure comprises:
receiving, by the access management network element, a first message from a terminal device, wherein the first message comprises a second message, the second message is used to cancel the location request, and the first message comprises the first information.

3. The method according to claim 2, wherein the first message is an uplink non-access stratum transport message.

4. The method according to claim 1, wherein receiving, by the access management network element, the first information in the cancel location procedure comprises:
receiving, by the access management network element, the first information from a location management network element, wherein the first information is sent when the location management network element receives a second message from a terminal device, and the second message is used to cancel the location request.

5. The method according to claim 4, wherein the second message is a cancel location message.

6. The method according to claim 4 or 5, wherein the method further comprises:
sending, by the access management network element, second information to the location management network element, wherein the second information is used to subscribe to a cancellation notification of the location request.

7. The method according to claim 6, wherein the second information is carried in a location determining request message, and the location determining request is used for location information of the terminal device.

8. The method according to claim 6 or 7, wherein sending, by the access management network element, the second information to the location management network element comprises:
if the access management network element determines that a type of the location request is a deferred location request, sending, by the access management network element, the second information to the location management network element.

9. The method according to any one of claims 1 to 8, wherein the method further comprises:
receiving, by the access management network element, the location resource from a gateway mobile location center network element; and
saving, by the access management network element, the location resource.

10. A location method, comprising:
receiving, by a location management network element, a second message from a terminal device, wherein the second message is used to cancel a location request; and
sending, by the location management network element, first information to an access management network element, wherein the first information indicates the access management network element to release a location resource for the location request.

11. The method according to claim 10, wherein the method further comprises:
receiving, by the location management network element, second information from the access management network element, wherein the second information is used to subscribe to a cancellation notification of the location request.

12. The method according to claim 10 or 11, wherein sending, by the location management network element, the first information to the access management network element comprises:
if the location management network element determines that a type of the location request is a deferred location request, sending, by the location management network element, the first information to the access management network element.

13. A location method, comprising:
initiating, by a terminal device, a cancel location procedure; and
sending, by the terminal device, first information to an access management network element, wherein the first information indicates to release a location resource for a location request.

14. The method according to claim 13, wherein sending, by the terminal device, the first information to the access management network element comprises:
if the terminal device determines that a type of the location request is a deferred location request, sending, by the terminal device, the first information to the access management network element.

15. The method according to claim 13 or 14, wherein the first information is carried in a first message, the first message comprises a second message, and the second message is used to cancel the location request.

16. A location method, comprising:
receiving, by a location management network element, a second message from a terminal device, wherein the second message is used to cancel a location request;
sending, by the location management network element, first information to an access management network element, wherein the first information indicates the access management network element to release a location resource for the location request; and
releasing, by the access management network element, the location resource based on the first information.

17. A location method, comprising:
receiving, by a first network element, fifth information from a second network element in a first communication network, wherein the fifth information indicates that a terminal device accesses a second communication network or the terminal device moves to the second communication network, the first network element is a location management network element of the first communication network, and the second network element is an access management network element of the first communication network; and
initiating, by the first network element, a cancel location procedure in the first communication network.

18. The method according to claim 17, wherein initiating, by the first network element, the cancel location procedure in the first communication network comprises:
releasing, by the first network element, a location resource for the terminal device in the first communication network.

19. The method according to claim 17 or 18, wherein the fifth information is carried in a location event notification message or a subscriber location report message.

20. The method according to any one of claims 17 to 19, wherein the method further comprises:
sending, by the first network element, sixth information to the second network element in the first communication network, wherein the sixth information is used to subscribe to the fifth information.

21. The method according to claim 20, wherein the first network element sends the sixth information to the second network element if at least one of the following conditions is met:
the first network element determines that an access type allowed by the terminal device for event reporting comprises an access type of the second communication network; and
the first network element determines that a type of a location request is a deferred location request.

22. The method according to claim 20 or 21, wherein the first communication network is a 5th generation system, the second communication network is an evolved packet system, the first network element is a mobility management entity, the second network element is an enhanced serving mobile location center network element, the sixth information is carried in an event exposure message, and the event exposure message is used to subscribe to an event notification.

23. The method according to any one of claims 17 to 22, wherein the method further comprises:
sending, by the first network element, seventh information to a gateway mobile location center network element, wherein the seventh information indicates that the terminal device accesses the second communication network or the terminal device moves to the second communication network.

24. The method according to claim 23, wherein the first communication network is the 5th generation system, the second communication network is the evolved packet system, the first network element is the mobility management entity, the second network element is the enhanced serving mobile location center network element, and the seventh information is carried in an event exposure message.

25. A location method, comprising:
receiving, by a second network element, a third message in a first communication network, wherein the third message indicates that a terminal device accesses a second communication network or the terminal device moves to the second communication network, and the second network element is an access management network element of the first communication network; and
sending, by the second network element, fifth information to the first network element in the first communication network, wherein the fifth information indicates that the terminal device accesses the second communication network or the terminal device moves to the second communication network, and the first network element is a location management network element of the first communication network.

26. The method according to claim 25, wherein the method further comprises:
receiving, by the second network element, sixth information from the first network element in the first communication network, wherein the sixth information is used to subscribe to the fifth information.

27. The method according to claim 25 or 26, wherein the method further comprises:
sending, by the second network element, eighth information to a gateway mobile location center network element, wherein the eighth information indicates that the terminal device accesses the second communication network or the terminal device moves to the second communication network.

28. The method according to claim 27, wherein the method further comprises:
receiving, by the second network element, a location resource from the first network element; and
determining, by the second network element, an address of the gateway mobile location center network element based on the location resource.

29. The method according to any one of claims 25 to 28, wherein the first communication network is a 5th generation system, the second communication network is an evolved packet system, the first network element is a location management network element, the second network element is an access management network element, the third message is from an access network device of the 5th generation system, and the third message is any one of the following:
a relocation complete notification message, a relocation response message, and a handover required message.

30. The method according to any one of claims 25 to 28, wherein the first communication network is an evolved packet system, the second communication network is a 5th generation system, the first network element is a mobility management entity, the second network element is an enhanced serving mobile location center network element, the third message is from an access network device of the evolved packet system, and the third message is any one of the following:
a forward relocation response message and a handover required message.

31. A location method, comprising:
receiving, by a second network element, a third message in a first communication network, wherein the third message indicates that a terminal device accesses a second communication network or the terminal device moves to the second communication network, and the second network element is an access management network element of the first communication network;
sending, by the second network element, fifth information to the first network element in the first communication network, wherein the fifth information indicates that the terminal device accesses the second communication network or the terminal device moves to the second communication network, and the first network element is a location management network element of the first communication network; and
initiating, by the first network element, a cancel location procedure in the first communication network.

32. A location apparatus, comprising a unit configured to implement the method according to any one of claims 1 to 9, the method according to any one of claims 10 to 12, or the method according to any one of claims 13 to 15, or a unit configured to implement the method according to any one of claims 17 to 24, or the method according to any one of claims 25 to 30.

33. A location apparatus, comprising:
a processor, configured to execute a computer program stored in a memory, to enable the apparatus to perform the method according to any one of claims 1 to 9, the method according to any one of claims 10 to 12, the method according to any one of claims 13 to 15, the method according to any one of claims 17 to 24, or the method according to any one of claims 25 to 30.

34. The apparatus according to claim 33, wherein the apparatus further comprises the memory.

35. A computer-readable storage medium, wherein the computer-readable storage medium stores a computer program, and when the computer program is run on a computer, the computer is enabled to perform the method according to any one of claims 1 to 9, the method according to any one of claims 10 to 12, the method according to any one of claims 13 to 15, the method according to any one of claims 17 to 24, or the method according to any one of claims 25 to 30.

36. A computer program product, wherein the computer program product comprises instructions for performing the method according to any one of claims 1 to 9, the method according to any one of claims 10 to 12, the method according to any one of claims 13 to 15, the method according to any one of claims 17 to 24, or the method according to any one of claims 25 to 30.
